# EUROPÄISCHE PATENTSCHRIFT

(11) **EP 2 221 690 B1**
(45) Veröffentlichungstag und Bekanntmachung des Hinweises auf die Patenterteilung: **09.04.2014**
(21) Anmeldenummer: 10153087.1
(22) Anmeldetag: 09.02.2010
(51) Int. Cl.: G05B 19/401, G05B 19/18, B23F 23/12, G01M 13/02, B23F 17/00

(54) **Werkzeugmaschine und Verfahren zum Bearbeiten eines Werkstücks**
Machine tool and method for machining a workpiece
Machine-outil et procédé destinés à l'usinage d'une pièce

(30) Priorität: 09.02.2009 DE 102009008120
(43) Veröffentlichungstag der Anmeldung: 25.08.2010
(73) Patentinhaber: DECKEL MAHO Pfronten GmbH, 87459 Pfronten (DE)
(72) Erfinder: Neumaier, Josef, 87459, Pfronten (DE); Lochbihler, Thomas, 6682, Vils (AT); Hansen, Uwe-Carsten, 87637, Eisenberg (DE)
(74) Vertreter: MERH-IP Matias Erny Reichl Hoffmann

(56) Entgegenhaltungen:
- DE-A1- 3 039 890
- DE-A1- 4 016 441
- DE-A1- 4 305 408
- DE-T2- 69 119 762
- DE-T2- 69 418 629
- DE-U1- 29 703 157
- US-A1- 2007 182 109
- KLINGELNBERG: "VERTIKALE SPIRALKEGELRAD-WÄLZFRÄSMASCHINE", OERLIKON. C 29, XX, XX, 1. Januar 2008 (2008-01-01), Seiten 1-12, XP003027549,

## Beschreibung

Die vorliegende Erfindung betrifft eine Werkzeugmaschine und ein Verfahren zum Bearbeiten eines Werkstücks mittels eines oder mehrerer, anhand von Steuerdaten gesteuerter Werkzeuge durch Zerspanen.

Insbesondere betrifft die vorliegende Erfindung eine Werkzeugmaschine zum programmgesteuerten Bearbeiten eines Werkstücks mittels eines oder mehrerer, anhand von Steuerdaten gesteuerter Werkzeuge durch Zerspanen, wobei die Werkzeugmaschine zumindest 5 simultan ansteuerbare Achsen und weiterhin ein Einspannmittel zum Einspannen des Werkstücks und eine Steuervorrichtung mit einem Aufnahmemittel zum Aufnehmen eines der einen oder mehreren Werkzeuge der Werkzeugmaschine umfasst, wobei insbesondere die Steuervorrichtung der Werkzeugmaschine dazu geeignet ist, das in dem Aufnahmemittel aufgenommene Werkzeug anhand der Steuerdaten entlang einer Werkzeugbahn zum Abtragen von Material von dem in dem Einspannmittel eingespannten Werkstück zu steuern.

Insbesondere betrifft die vorliegende Erfindung eine Werkzeugmaschine und ein Verfahren zum programmgesteuerten Bearbeiten eines Werkstücks, um eine erste Verzahnung auf dem ersten Werkstück zu fertigen, insbesondere um das Werkstück von einem Rohteil zu einem eine erste Verzahnung aufweisenden Fertigteil zu bearbeiten, wobei das erste Werkstück insbesondere ein Gegenstück zu einem eine zweite Verzahnung aufweisenden zweiten Werkstück ist, derart dass eine erste Zahnflanke der ersten Verzahnung eine Gegenflanke einer zweiten Zahnflanke der zweiten Verzahnung bildet.

Insbesondere betrifft die vorliegende Erfindung eine Werkzeugmaschine und ein Verfahren zum Herstellen eines oder mehrerer Werkstücke an der Werkzeugmaschine von einem Rohteil zu einem eine Verzahnung aufweisenden Fertigteil, insbesondere Zahnräder, wie z. B. ein Stirnzahnrad mit einer Innenverzahnung, ein Stirnzahnrad mit einer Außenverzahnung oder ein Kegelzahnrad, ferner auch Zahnstangen, an einer zumindest 5 Achsen umfassenden, programmgesteuerten Werkzeugmaschine, insbesondere einer zumindest 5 Achsen umfassenden CNC-Werkzeugmaschine. Insbesondere betrifft die vorliegende Erfindung hierbei eine Komplettbearbeitung von einem Rohteil zu einem eine Verzahnung aufweisenden Fertigteil an einer CNC-Werkzeugmaschine.

### Hintergrund der Erfindung

Dem Stand der Technik sind CNC-gesteuerte Werkzeugmaschinen bekannt, die zumindest 5 Achsen umfassen, die es ermöglichen, ein Werkzeug in 5 Freiheitsgraden frei durch den Raum zum Abtragen von Material von dem Werkstück zu bewegen. Die 5 Bewegungsfreiheitsgrade umfassen hierbei die zumindest drei Raumrichtungsfreiheitsgrade (meist konventionell drei orthogonal ansteuerbare Raumrichtungsfreiheitsgrade, insbesondere bezeichnet als X-Achse, Y-Achse und Z-Achse), die durch zumindest drei Linearachsen angesteuert werden können, und zumindest zwei Winkel- bzw. Rotationsfreiheitsgrade, die eine beliebige Werkzeugorientierung ermöglichen. Die Winkel- bzw. Rotationsfreiheitsgrade können hierbei durch zwei oder mehrere Rundachsen der Werkzeugmaschine angesteuert werden.

Heutige CNC-Werkzeugmaschinen mit zumindest 5 Achsen ermöglichen es, die 5 Freiheitsgrade simultan anzusteuern, wodurch besonders komplexe und effiziente Werkzeugwege relativ zu einem eingespannten Werkstück ermöglicht werden. Des Weiteren sind dem Stand der Technik 6 Achsen aufweisende CNC-Werkzeugmaschinen bekannt, an denen 3 Linearachsen und 3 Rundachsen simultan angesteuert werden können. Auch CNC-Werkzeugmaschinen mit mehr als 6 Achsen sind möglich.

Vorstehend beschriebene CNC-Werkzeugmaschinen werden im Formenbau universell eingesetzt, um Fertigteile mit komplexer Geometrie effizient und präzise durch zerspanendes Bearbeiten zu fertigen. Für den Maschinenbau, insbesondere z.B. im Schiffbau, bei der Umwelttechnik (z.B. bei Windkraftanlagen), in der Luftfahrt und beim Werkzeugmaschinenbau kann es zudem erforderlich sein, Getriebe unterschiedlichster Leistungen bereitzustellen, für die Zahnräder, insbesondere Stirnräder und Kegelräder, nach unterschiedlichen Anforderungen an Oberflächengüte, Tragbild und Laufverhalten bzw. Abrollverhalten gefertigt werden müssen. Hierbei steht oftmals nicht zwingend das Erreichen einer hohen Stückzahl im Vordergrund, sondern vielmehr eine hohe Flexibilität in Bezug auf die Typenvielfalt, insbesondere in Bezug auf individuelle Geometrien umfassend komplizierter Flankengeometrien und komplizierter Zahnflankengeometrien.

Dem Stand der Technik sind zur Fertigung von eine Verzahnung aufweisenden Fertigteilen, insbesondere Zahnräder, wie Stirnräder oder Kegelräder, ferner Zahnstangen, Spezialwerkzeugmaschinen bekannt, die mit Spezialwerkzeugen ausgerüstet sind, um Zahnprofile von Zahnrädern, wie Stirnrädern oder Kegelrädern in unterschiedlichen Ausführungsformen zu fertigen. Insbesondere sind dem Stand der Technik als Spezialmaschinen zum Fertigen einer Verzahnung von Zahnrädern oder Zahnstangen Wälzfräsmaschinen bekannt, die dazu geeignet sind, in einem Wälzfräsprozess mit Wälzfräswerkzeugen eine Verzahnung auf einem Werkstück zu formen.

Derartige Spezialmaschinen, insbesondere die vorstehend beschriebenen Wälzfräsmaschinen, sind in der Anschaffung und in der Unterhaltung kostenintensiv und die Fertigung von individuellen Flankenprofilen ist eingeschränkt durch die Form der Spezialwerkzeuge, z.B. die spezielle Schneidenform der Wälzfräswerkzeuge von Wälzfräsmaschinen, durch die bereits eine erreichbare bzw. fertigbare Zahn- bzw. Flankengeometrie vorgeben ist. Außerdem ist die Fertigung von individuellen Flankenprofilen an den vorstehend beschriebenen Spezialmaschinen eingeschränkt durch die beschränkten Freiheitsgrade in der möglichen Relativbewegung zwischen Werkstück und Werkzeug.

Des Weiteren sind zum Erreichen einer hohen Oberflächengüte gegebenenfalls Nachbearbeitungen der Werkstücke nach der Bearbeitung an den vorstehend beschriebenen Spezialmaschinen erforderlich, z.B. an zusätzlichen Spezialmaschinen.

Um die Probleme der vorstehend genannten Spezialmaschinen, insbesondere der Wälzfräsmaschinen, zum Fertigen von Zahnrädern, insbesondere Stirnrädern oder Kegelrädern, oder Zahnstangen zu lösen, ist es vorteilhaft, derartige Zahnräder, insbesondere Stirnräder oder Kegelräder an einer zumindest 5 Achsen umfassenden CNCgesteuerten Werkzeugmaschine zu fertigen.

Dies ermöglicht den Einsatz von Standardwerkzeugen zum Herstellen dieser Fertigteile, wobei durch die hohe Flexibilität und den großen Einsatzbereich einer in mindestens 5 Freiheitsgraden ansteuerbaren Werkzeugmaschine komplexeste Geometrien, insbesondere komplexeste Flankenprofile bei Zahnrädern, wie Stirnrädern oder Kegelrädern, ermöglicht sind, die über die Möglichkeiten an bisher bekannten Spezialmaschinen hinaus gehen.

Ein Verfahren zum Bearbeiten eines Werkstücks zum Herstellen eines vorbestimmten Zahnrads durch Zerspanen an einer zumindest 5 Achsen umfassenden Werkzeugmaschine wird in dem Artikel "Auf einfachem Weg zu guten Zähnen Zahnräder mit hoher Qualität auf Standardmaschinen fräsen" von Hans -Peter Schossig beschrieben (erschienen in der Zeitschrift Werkstatt und Betrieb, im Carl Hanser Verlag, München, Ausgabe 2007, Nr. 4/28, auf den Seiten 28-32, ISSN 0043-2792).

Dieser vorstehend genannte Artikel beschreibt ein Verfahren zur Herstellung von Zahnrädern mit einer Werkzeugmaschine umfassend 5 Achsen, insbesondere im Testbetrieb zum Herstellen einer Kegelradpaarung mit einer Oberflächengüte der Verzahnungsqualität 6 nach DIN 3965. In dem beschriebenen Verfahren werden zunächst alle notwendigen Parameter der Verzahnung nach DIN-Norm eingegeben. Dies entspricht grundlegenden Geometrieparametern der Fertigteilgeometrie des Fertigteils. Dazu können zum Beispiel auch quantitative Angaben über ein gewünschtes Tragbild bei einer vorbestimmten bzw. geforderten Zahnform oder weitere Angaben bezüglich einer gewünschten Balligkeit oder weitere eine Krümmung betreffende Angaben in einzelnen Bereichen oder über die gesamten Zahnflanke bzw. das gesamte Zahnflankenprofil eingegeben werden. Hierbei wird somit vor der tatsächlichen Bearbeitung eine Sollgeometrie der Verzahnung vorgegeben bzw. bestimmt, insbesondere z.B. eine gewünschte Zahnflankengeometrie und/oder gewünschte Zahnlückengeometrie.

Diese grundlegenden Geometrieparameter werden in ein Rechnerterminal eingetippt und im Anschluss wird im Rechner durch mathematische bzw. numerische Berechnungen eine mathematische Beschreibung der gewünschten Zahngeometrie erzeugt. Mit Hilfe eines CAD/CAM-Systems wird auf Basis des Rechenergebnisses ein NC-Programm erzeugt, nach dem die 5-Achs-Werkzeugmaschine das gewünschte Fertigteil mit Standardwerkzeugen, insbesondere z. B. einem bekannten Schaftfräser, hergestellt werden kann. Ein ähnliches Verfahren wird z.B. auch in der WO 2008/133517 A1 gezeigt.

In den vorstehend beschriebenen Herstellungsverfahren für derartige Verzahnungen aufweisende Fertigteile an einer zumindest 5 Achsen umfassenden Werkzeugmaschine, insbesondere zum Herstellen von Zahnrädern, tritt hierbei das Problem auf, dass nach der Bearbeitung an der Werkzeugmaschine festgestellt werden muss, ob die vorgegebene Verzahnungsqualität, eine gewünschte Oberflächengüte, eine gewünschte Zahnflankengeometrie, eine gewünschte Zahnlückengeometrie, insbesondere das gewünschte Zahnflankenprofil, und/oder weitere vorgegebene Qualitätserfordernisse bei der Bearbeitung an der CNC-Werkzeugmaschine erreicht wurden, bzw. eingehalten werden konnten.

Hierzu ist es gegebenenfalls notwendig, das bearbeitete Werkstück nach Bearbeitung an der CNC-Werkzeugmaschine aus einem Einspannmittel der Werkzeugmaschine auszuspannen und in einem Prüfsystem daraufhin zu prüfen, ob die vorstehend erwähnten, vorgegebenen Qualitätserfordernisse erreicht wurden oder eingehalten wurden. Wird hierbei festgestellt, dass eine gewünschte Soll-Verzahnungsgeometrie bei der Bearbeitung an der CNC-Werkzeugmaschine nicht erreicht werden konnte, muss das Werkstück gegebenenfalls an einer weiteren Maschine oder erneut nach einer weiteren Einspannung in der CNC-Werkzeugmaschine nachbearbeitet werden.

DE 40 16 441 A1 betrifft eine Einzweckmaschine zum Abwälzfräsen von Zahnrädern an der ein rotierender Messkopf bereitgestellt ist. DE 297 03 157 U1 zeigt eine Anordnung zum Ausführen einer Prüfung von Kegelrädern an einer Bearbeitungsmaschine.

### Zusammenfassung der Erfindung

Eine Aufgabe der vorliegenden Erfindung ist es somit, eine Werkzeugmaschine zum Bearbeiten von einem Werkstück mittels eines oder mehrerer, anhand von Steuerdaten gesteuerten Werkzeuge durch Zerspanen an einer zumindest 5 Achsen umfassenden Werkzeugmaschine bereitzustellen, bei der die Probleme der vorstehend beschriebenen Verfahren zum Herstellen von eine Verzahnung aufweisenden Fertigteilen vermieden werden.

Eine weitere Aufgabe der vorliegende Erfindung ist es, eine Werkzeugmaschine und ein Verfahren zum Bearbeiten eines eine Verzahnung aufweisenden Werkstück mittels eines oder mehrerer, anhand von Steuerdaten gesteuerten Werkzeuge durch Zerspanen bereitzustellen, welche eine Herstellung von eine Verzahnung aufweisenden Fertigteilen an einer zumindest 5 Achsen umfassenden Werkzeugmaschine im Gegensatz zu den vorstehend beschriebenen Verfahren nach dem Stand der Technik optimiert, indem insbesondere das Herstellungsverfahren in Bezug auf eine Qualitätsprüfung optimiert wird, so dass Qualitätsprüfungen in zusätzlichen Maschinen vermieden werden können, insbesondere um zeitintensive Ein- und Ausspannvorgänge des zu bearbeitenden Werkstücks, gegebenenfalls für eine Nachbearbeitung, zu vermeiden.

Die vorstehend beschriebenen Aufgaben der vorliegenden Erfindung werden gelöst durch eine Werkzeugmaschine zum Bearbeiten von einem Werkstück mit zumindest 5 simultan ansteuerbaren Achsen nach Anspruch 1 und ein Verfahren zum Bearbeiten von einem Werkstück durch eine Werkzeugmaschine durch Zerspanen nach Anspruch 10. Bevorzugte Ausführungsbeispiele werden in den abhängigen Ansprüchen beschrieben.

Eine Werkzeugmaschine zum Bearbeiten, insbesondere programmgesteuerten Bearbeiten, eines Werkstücks mittels eines oder mehrerer anhand von Steuerdaten gesteuerten Werkzeuge durch Zerspanen nach der vorliegenden Erfindung umfasst zumindest 5 simultan ansteuerbare Achsen und weiterhin ein Einspannmittel zum Einspannen des Werkstücks und eine Steuervorrichtung mit einem Aufnahmemittel zum Aufnehmen eines der einen oder mehreren Werkzeuge der Werkzeugmaschine, wobei die Steuervorrichtung dazu geeignet ist, das in dem Aufnahmemittel aufgenommene Werkzeug anhand der Steuerdaten entlang einer Werkzeugbahn zum Abtragen von Material von dem in dem Einspannmittel eingespannten Werkstück zu steuern.

Erfindungsgemäß ist die Werkzeugmaschine dazu geeignet, ein erstes Werkstück zu bearbeiten, um eine erste Verzahnung auf dem ersten Werkstück zu fertigen, wobei das erste Werkstück ein Gegenstück zu einem eine zweite Verzahnung aufweisenden zweiten Werkstück ist, derart dass eine erste Zahnflanke der ersten Verzahnung eine Gegenflanke einer zweiten Zahnflanke der zweiten Verzahnung bildet.

Die Werkzeugmaschine nach der vorliegenden Erfindung ist insbesondere **dadurch gekennzeichnet, dass** die Werkzeugmaschine ein Prüfsystem umfasst, das dazu geeignet ist, nach und/oder während der Bearbeitung des ersten Werkstücks an der Werkzeugmaschine zu ermitteln, ob eine momentane Geometrie, insbesondere eine momentane Zahnflankengeometrie und/oder momentane Zahnlückengeometrie, der ersten Verzahnung des ersten Werkstücks von einer Soll-Verzahnungsgeometrie, insbesondere von einer Soll-Zahnflankengeometrie und/oder Soll-Zahnlückengeometrie, der ersten Verzahnung des ersten Werkstücks abweicht.

Dies hat den Vorteil, dass die Werkzeugmaschine nach der vorliegenden Erfindung insbesondere dazu geeignet ist, nach und/oder während der Bearbeitung des ersten Werkstücks an der Werkzeugmaschine zu ermitteln, ob die momentane Geometrie, also die vorliegende Geometrie in einem momentanen Bearbeitungszustand während der Prüfung durch das Prüfsystem, insbesondere die zu diesem Betriebszustand gehörende momentane Zahnflankengeometrie und/oder momentane Zahnlückengeometrie, zumindest einer Zahnflanke oder zumindest zwischen zwei Zahnflanken, der ersten Verzahnung des ersten Werkstücks von der der Bearbeitung an der Werkzeugmaschine zugrunde liegenden, gewünschten, insbesondere vor Bearbeitung vorgegebenen Soll-Verzahnungsgeometrie der ersten Verzahnung des ersten Werkstücks abweicht.

Hierbei gibt die vorgegebene Soll-Verzahnungsgeometrie vorzugsweise z. B. an, welche Art der Verzahnung vorgegeben ist, z. B. Geradverzahnung, Schrägverzahnung, Doppelschrägverzahnung bzw. Pfeilverzahnung, Kreisbogenverzahnung, Spiralverzahnung, Evolventenverzahnung oder eine andere Verzahnungsform. Des Weiteren gibt die vorgegebene Soll-Verzahnungsgeometrie vorzugsweise z. B. Parameterwerte an, die das vorgegebene Zahnflankenprofil des zu fertigenden Fertigteils angeben, insbesondere z. B. Parameter betreffend die Zahnbreite, Zahnhöhe, Balligkeit und/oder die vorgegebene Krümmung der Zahnflanken, z. B. Evolventenzahnform, Zykloidenzahnform oder eine andere Zahnform.

Bei einer zumindest 5 Achsen umfassenden CNC-Werkzeugmaschine sind aufgrund der vorteilhaft bereitgestellten Flexibilität in der Werkzeugsteuerung in zumindest 5 Freiheitsgraden annähernd beliebige Freiformflächen fertigbar. Somit ist das Fertigen von Zahnrädern mit beliebigen Zahnflanken denkbar, wobei die vorgegebene Soll-Verzahnungsgeometrie hierfür z.B. auch eine mathematische Beschreibung der Zahnflankenflächen enthalten kann.

Die vorliegende Erfindung stellt eine Werkzeugmaschine bereit, die weiterhin ein Prüfsystem umfasst, an dem das Werkstück bzw. die momentane Verzahnungsgeometrie des Werkstücks nach und/oder während der Bearbeitung an der Werkzeugmaschine ermittelt werden kann, vorzugsweise ohne das Werkstück aus der Einspannsituation in dem Einspannmittel der Werkzeugmaschine auszuspannen. Somit vermag es die vorliegende Erfindung eine Werkzeugmaschine bereitstellen, die neben der Bearbeitung des Werkstücks zusätzlich eine Qualitätsprüfung bzw. eine Prüfung einer Abweichung von einer vorgegebenen Soll-Verzahnungsgeometrie ermöglicht, so dass auf den Einsatz weiterer Maschinen verzichtet werden kann, um die Qualität der erreichten Verzahnungsform zu prüfen.

Vorzugsweise wird die vorstehend beschriebene Soll-Verzahnungsgeometrie, insbesondere die Soll-Zahnflankengeometrie und/oder die Soll-Zahnlückengeometrie, der ersten Verzahnung des ersten Werkstücks, und gegebenenfalls auch eine entsprechende Soll-Verzahnungsgeometrie der zweiten Verzahnung des zweiten Werkstücks, durch eine für das fertig bearbeitete erste und/oder zweite Werkstück vorgegebene Verzahnungspualität, insbesondere eine vorgegebene Oberflächengüte, bestimmt.

Dies hat den Vorteil, dass die vorgegebene Soll-Verzahnungsgeometrie, die bei der Bearbeitung des Werkstücks, insbesondere eines Zahnrads, an der Werkzeugmaschine erreicht werden soll, an einer vorgegebenen Verzahnungsqualität, insbesondere einer vorgegebenen Oberflächengüte der Zahnflanken, orientiert ist, so dass anhand einer ermittelten Abweichung der ermittelten momentanen Verzahnungsgeometrie der ersten Verzahnung des ersten Werkstücks von der vorgegebenen Soll-Verzahnungsgeometrie ermittelt werden kann, ob das in dem Einspannmittel der Werkzeugmaschine eingespannte erste Werkstück bzw. die erste Verzahnung des ersten Werkstücks in dem momentanen Bearbeitungszustand die Anforderungen an eine zu erreichende Verzahnungsgeometrie, insbesondere eine zu erreichende Verzahnungsqualität oder Oberflächengüte, erreicht ist, oder ob es vorzugsweise erforderlich ist, das Werkstück zum Erreichen der gewünschten Verzahnungsqualität bzw. Oberflächengüte an der Werkzeugmaschine nachzubearbeiten, gegebenenfalls programmgesteuert.

Vorzugsweise ist das erste Werkstück, insbesondere im Fertigzustand nach Bearbeitung an der Werkzeugmaschine, ein Stirnzahnrad mit einer Innenverzahnung, ein Stirnzahnrad mit einer Außenverzahnung, eine Zahnstange, oder ein Kegelzahnrad und vorzugsweise ist das zweite Werkstück, insbesondere im Fertigzustand nach Bearbeitung an der Werkzeugmaschine, ein Stirnzahnrad mit einer Innenverzahnung, ein Stirnzahnrad mit einer Außenverzahnung, eine Zahnstange, oder ein Kegelzahnrad, vorzugsweise derart, dass das zweite Werkstück ein Gegenstück zu dem ersten Werkstück ist.

Dies hat den Vorteil, dass an der Werkzeugmaschine insbesondere Stirnzahnräder mit einer Innenverzahnung, Stirnzahnräder mit einer Außenverzahnung, Zahnstangen oder Kegelzahnräder gefertigt werden können, die mit einem zweiten Werkstück ein Verzahnungspaar, z.B. ein Zahnradpaar, bilden, wobei das zweite Werkstück ein Stirnzahnrad mit einer Innenverzahnung, ein Stirnzahnrad mit einer Außenverzahnung, eine Zahnstange oder ein Kegelzahnrad ist, welches insbesondere gegebenenfalls auch an der Werkzeugmaschine gefertigt werden kann, gegebenenfalls vor, während oder nach einer Bearbeitung des ersten Werkstücks.

Vorzugsweise umfasst das vorstehend beschriebene Prüfsystem der Werkzeugmaschine ein erstes Messtastmittel, das dazu geeignet ist, durch Abtasten einer Zahnflankenseite der ersten Verzahnung des ersten Werkstücks mittels eines Messtasters festzustellen bzw. zu ermitteln, ob die momentane Verzahnungsgeometrie der ersten Verzahnung des ersten Werkstücks von der Soll-Verzahnungsgeometrie der ersten Verzahnung des ersten Werkstücks abweicht.

Dies hat den Vorteil, dass das Prüfsystem der Werkzeugmaschine es ermöglicht, eine Zahnflankenseite der ersten Verzahnung des ersten Werkstücks mechanisch mittels eines Messtasters abzutasten, um durch das mechanische Abtasten durch den Messtaster die momentan vorliegende Verzahnungsgeometrie der ersten Verzahnung zu ermitteln und diese mit der vorgegebenen Soll-Verzahnungsgeometrie der ersten Verzahnung zu vergleichen. Somit kann eine mögliche Abweichung festgestellt bzw. ermittelt werden. Hierzu ist der Messtaster vorzugsweise dazu geeignet, das Werkstück in unterschiedlichen Winkellagen relativ zu dem Werkstück abzutasten, so dass die momentane Geometrie einer oder mehrerer Zahnflankenseiten der ersten Verzahnung durch mechanisches Abtasten ermittelt werden können. Vorzugsweise ist der Messtaster hierbei dazu geeignet, analog zu einem Werkzeug der Werkzeugmaschine, in ein Aufnahmemittel der Steuervorrichtung der Werkzeugmaschine aufgenommen zu werden, so dass der Messtaster zum mechanischen Abtasten einer Zahnflankenseite der ersten Verzahnung durch die Steuervorrichtung gesteuert werden kann. Somit ist es möglich, ebenfalls den Messtaster analog zu einem Werkzeug der Werkzeugmaschine in 5 Freiheitsgraden relativ zu dem eingespannten Werkstück mittels der zumindest 5 Achsen der Werkzeugmaschine zu steuern.

Vorzugsweise umfasst das vorstehend beschriebene Prüfsystem der Werkzeugmaschine ein zweites Messtastmittel, das dazu geeignet ist, durch optisches und/oder induktives Abtasten einer Zahnflankenseite der ersten Verzahnung des ersten Werkstücks festzustellen bzw. zu ermitteln, ob die momentane Geometrie der ersten Verzahnung des ersten Werkstücks von der Soll-Verzahnungsgeometrie, insbesondere von einer Soll-Zahnflankengeometrie und/oder Soll-Zahnlückengeometrie, der ersten Verzahnung des ersten Werkstücks abweicht.

Dies hat den Vorteil, dass neben oder anstatt des vorstehend beschriebenen mechanischen Abtastens einer Zahnflankenseite durch alternative Verfahren eine momentane Geometrie der ersten Verzahnung des ersten Werkstücks festgestellt werden kann, indem ein zweites Messtastmittel bereitgestellt ist, das dazu geeignet ist, durch optisches und/oder induktives Abtasten einer Zahnflankenseite der ersten Verzahnung eine momentane Geometrie der ersten Verzahnung des ersten Werkstücks zu ermitteln. Optisches Abtasten einer Zahnflankenseite kann hierbei gegebenenfalls durch einen oder mehrere Laserstrahlen in vorzugsweise mehreren Winkelstellungen zu dem Werkstück durch ein optisches Abtastmittel der Werkzeugmaschine erfolgen, wobei der Begriff des optischen Abtastens hier nicht einschränkend auf einen sichtbaren Wellenlängenbereich verstanden werden soll.

Vorzugsweise ist das Aufnahmemittel der Werkzeugmaschine dazu geeignet ist, das zweite Werkstück aufzunehmen.

Dies hat den Vorteil, dass eine Werkzeugmaschine bereitgestellt werden kann, die ein Aufnahmemittel an der Steuervorrichtung der Werkzeugmaschine umfasst, die neben der Aufnahme eines oder mehrerer Werkzeuge der Werkzeugmaschine oder des vorstehend beschriebenen Messtasters oder anderer Werkzeuge ermöglicht, das zweite Werkstück aufzunehmen, wobei das zweite Werkstück wie vorstehend beschrieben vorzugsweise ein Stirnzahnrad mit Außenverzahnung, Stirnzahnrad mit einer Innenverzahnung, eine Zahnstange oder ein Kegelzahnrad ist. Somit ist es an der Werkzeugmaschine möglich, nicht nur in dem Einspannmittel der Werkzeugmaschine, sondern auch in dem Aufnahmemittel der Steuervorrichtung Werkstücke aufzunehmen und gegebenenfalls mit der Steuervorrichtung der Werkzeugmaschine durch eine oder mehrere der zumindest 5 Achsen der Werkzeugmaschine zu steuern.

Vorzugsweise ist die Werkzeugmaschine dazu geeignet, das in dem Aufnahmemittel aufgenommene zweite Werkstück und das in dem Einspannmittel eingespannte erste Werkstück relativ zueinander derart zu steuern, dass die erste Verzahnung des ersten Werkstücks und die zweite Verzahnung des zweiten Werkstücks sich im Eingriff befinden und zumindest eine erste Flanke der ersten Verzahnung mit zumindest einer ersten Gegenflanke der zweiten Verzahnung zusammenwirkt.

Dies hat den Vorteil, dass die Werkzeugmaschine insbesondere dazu geeignet ist, ein erstes und ein zweites Werkstück, welche ein Verzahnungspaar darstellen, relativ zueinander derart anzusteuern, dass die erste Verzahnung des ersten Werkstücks und die zweite Verzahnung des zweiten Werkstücks entsprechend der jeweilig gewählten Verzahnungsform in Eingriff der Verzahnungen gebracht werden können, so dass eine erste Flanke der ersten Verzahnung mit zumindest einer ersten Gegenflanke der zweiten Verzahnung zusammenwirkt. Somit kann ein Eingriff des ersten und des zweiten Werkstücks hergestellt werden, wie er bei einem gegebenenfalls späteren Betrieb des ersten und des zweiten Werkstücks als Verzahnungspaar auftritt bzw. auftreten soll.

Vorzugsweise umfasst das Prüfsystem der Werkzeugmaschine eine Tragbild-Ermitteleinrichtung, die dazu geeignet ist, ein Tragbild zwischen der ersten Flanke der ersten Verzahnung und der ersten Gegenflanke der zweiten Verzahnung mittels Tuschieren zu ermitteln.

Dies hat den Vorteil, dass ein erstes und ein zweites Werkstück jeweils eingespannt in das Einspannmittel der Werkzeugmaschine und das Aufnahmemittel der Steuervorrichtung der Werkzeugmaschine derart in Eingriff gebracht werden können, dass ein Tragbild zwischen der ersten Flanke der ersten Verzahnung und der ersten Gegenflanke der zweiten Verzahnung mittels Tuschieren ermittelt werden kann. Hierbei umfasst die Tragbild-Ermitteleinrichtung vorzugsweise Mittel, die es ermöglichen, zumindest auf eine Verzahnung der ersten Verzahnung oder zweiten Verzahnung Farbe aufzutragen, so dass bei dem Zusammenwirken der ersten Flanke der ersten Verzahnung und der ersten Gegenflanke der zweiten Verzahnung Farbe von der ersten Flanke auf die ersten Gegenflanke oder von der ersten Gegenflanke auf die erste Flanke übertragen wird, wobei die Tragbild-Ermitteleinrichtung vorzugsweise weiterhin Mittel umfasst, die dazu geeignet sind, durch optische Erkennung ein Tragbild zu ermitteln, insbesondere durch optische Erkennung der Oberfläche der ersten Flanke oder der ersten Gegenflanke, auf die bei Zusammenwirken von der ersten Gegenflanke oder ersten Flanke Farbe übertragen wurde.

Dies hat den Vorteil, dass die Werkzeugmaschine insbesondere eine Tragbild-Ermitteleinrichtung bereitstellt, die gegebenenfalls automatisch an der Werkzeugmaschine ein Tragbild ermitteln kann, insbesondere ein Tragbild entsprechend einer momentanen Geometrie der Verzahnung des ersten Werkstücks nach und/oder während der Bearbeitung an der Werkzeugmaschine. Somit ist es nicht erforderlich, zum Ermitteln des Tragbilds der momentanen Verzahnung ein erstes Werkstück aus dem Einspannmittel der Werkzeugmaschine auszuspannen, um ein Tragbild gegebenenfalls manuell oder an einer externen Maschine zu ermitteln.

Für den Fall, dass das erste oder zweite Werkstück eine Zahnstange ist, ist die Werkzeugmaschine vorzugsweise dazu geeignet, eine oder mehrere Linearachsen der Werkmaschine zum Steuern des in dem Aufnahmemittel aufgenommenen zweiten Werkstücks und des in dem Einspannmittel eingespannten ersten Werkstücks relativ zueinander anzusteuern.

Dies hat den Vorteil, dass das erste Werkstück und das zweite Werkstück insbesondere bei einer im Eingriff befindlichen Verzahnung relativ zueinander gesteuert werden können, wobei die tatsächliche Bewegung des ersten oder des zweiten Werkstücks zumindest durch eine oder mehrere Linearachsen der Werkzeugmaschine und gegebenenfalls durch eine oder mehrere Rundachsen der Werkzeugmaschine bewirkt wird. Ist das erste oder zweite Werkstück in diesem Fall eine Zahnstange, so ist das Gegenstück ein Stirnrad mit Außenverzahnung, Kegelzahnrad, insbesondere gegebenenfalls ein Ritzel, welches vorzugsweise durch eine Rundachse der Werkzeugmaschine um eine Mittelachse rotatorisch angetrieben werden kann.

Für den Fall, dass das erste Werkstück und/oder das zweite Werkstück ein Zahnrad ist, insbesondere ein Kegelrad oder Stirnrad, ist die Werkzeugmaschine vorzugsweise dazu geeignet, eine oder mehrere Rundachsen der Werkmaschine zum Steuern des in dem Aufnahmemittel aufgenommenen zweiten Werkstücks und des in dem Einspannmittel eingespannten ersten Werkstücks relativ zueinander anzusteuern.

Dies hat den Vorteil, dass das erste Werkstück und das zweite Werkstück an der Werkzeugmaschine bei im Eingriff befindlicher Verzahnung relativ zueinander gesteuert werden können, wobei für den Fall, dass das erste Werkstück und/oder das zweite Werkstück ein Zahnrad ist, die Werkzeugmaschine dazu geeignet ist, das Zahnrad durch zumindest eine der Rundachsen der Werkzeugmaschine vorzugsweise um eine Mittelachse des Zahnrades anzutreiben. Handelt es sich sowohl bei dem ersten Werkstück als auch bei dem zweiten Werkstück jeweils um ein Zahnrad, so dass das erste Werkstück und das zweite Werkstück ein Zahnradpaar bilden, so ist die Werkzeugmaschine hiermit vorteilhaft dazu geeignet, das erste Werkstück und das zweite Werkstück als im Eingriff befindliches Zahnradpaar anzutreiben, wobei vorzugsweise jeweils das erste und das zweite Werkstück durch jeweils eine Rundachse um die jeweilige Mittelachse der Zahnräder anzutreiben.

Für den Fall, dass das erste Werkstück in Zahnrad ist, insbesondere ein Kegelrad oder Stirnrad, und das zweite Werkstück ein Zahnrad ist, insbesondere ein Kegelrad oder Stirnrad, ist die Werkzeugmaschine vorzugsweise dazu geeignet, das erste Werkstück rotatorisch vorzugsweise um eine Mittelachse des ersten Werkstücks mittels einer ersten Rundachse anzutreiben, die vorzugsweise dazu geeignet ist, das Einspannmittel der Werkzeugmaschine rotatorisch anzutreiben, wobei die Werkzeugmaschine vorzugsweise weiterhin dazu geeignet ist, das zweite Werkstück rotatorisch vorzugsweise um eine Mittelachse des zweiten Werkstücks mittels einer zweiten Rundachse anzutreiben, die vorzugsweise dazu geeignet ist, das Aufnahmemittel der Werkzeugmaschine rotatorisch anzutreiben.

Dies hat den Vorteil, dass die Werkzeugmaschine dazu geeignet ist, ein Zahnradpaar bei im Eingriff befindlicher Verzahnung des Zahnradpaares derart anzutreiben, wie es für den späteren Betrieb des Zahnradpaares vorgegeben bzw. gewünscht ist. Jedes der Zahnräder kann somit jeweils mit einer Rundachse der Werkzeugmaschine rotatorisch um eine jeweilige Mittelachse des Zahnrades angetrieben werden, wobei die zumindest 5 Achsen der Werkzeugmaschine es ermöglichen, eine exakte Anstellung des Zahnradpaares relativ zueinander anzusteuern, so dass gegebenenfalls mittels der NC-Funktionalität der Werkzeugmaschine auch eine rotatorische Verspannung zwischen den Zahnrädern, insbesondere zwischen einem Zahnrad und dem entsprechenden Ritzel, eingestellt werden kann. Es ist somit möglich, die Lage der Zahnräder des Zahnradpaares, insbesondere des Zahnrades mit einem entsprechenden Ritzel zueinander, über die 5 NC-Achsen der Werkzeugmaschine einzustellen, wobei ein Zahnrad gegebenenfalls über einen NC-Rundtisch, einen NC-Teilapparat oder eine vollintegrierte NC-Einspannvorrichtung angetrieben werden kann, wobei weiterhin das andere Zahnrad, insbesondere ein Ritzel, über eine Arbeitsspindel der Werkzeugmaschine, insbesondere eine Arbeitsspindel in der Steuervorrichtung der Werkzeugmaschine, angetrieben werden kann.

Vorzugsweise umfasst das Prüfsystem der Werkzeugmaschine weiterhin ein Laufverhalten-Prüfmittel, das dazu geeignet ist, zu ermitteln, ob ein gemeinsames Laufverhalten des ersten Werkstücks und des zweiten Werkstücks von einem Soll-Laufverhalten des ersten Werkstücks und des zweiten Werkstücks abweicht, während das erste Werkstück und das zweite Werkstück vorzugsweise relativ zueinander derart gesteuert werden, dass die erste Verzahnung des ersten Werkstücks und die zweite Verzahnung des zweiten Werkstücks sich im Eingriff befinden und vorzugsweise zumindest die erste Flanke der ersten Verzahnung mit der ersten Gegenflanke der zweiten Verzahnung abrollend zusammenwirkt.

Dies hat den Vorteil, dass bei einem Antrieb des erstens Werkstücks und des zweiten Werkstücks bei einer sich im Eingriff befindlichen Verzahnung des Verzahnungspaares ein Laufverhalten des Verzahnungspaares geprüft bzw. ermittelt kann. Somit kann an der Werkzeugmaschine bei Einspannung des ersten Werkstücks in dem Einspannmittel der Werkzeugmaschine und des zweiten Werkstücks in dem Aufnahmemittel der Steuervorrichtung der Werkzeugmaschine ein Laufverhalten des Verzahnungspaares geprüft bzw. ermittelt werden, ohne dass das zu bearbeitende erste Werkstück aus dem Einspannmittel der Werkzeugmaschine ausgespannt werden muss.

Vorzugsweise umfasst das Laufverhalten-Prüfmittel einen oder mehrere akustische Aufnehmer und ist vorzugsweise dazu geeignet, durch Ermitteln eines beim Antreiben des ersten Werkstücks und des zweiten Werkstücks entstehenden Laufgeräusches vorzugsweise durch die einen oder mehreren akustischen Aufnehmer zu ermitteln, ob ein gemeinsames Laufverhalten des ersten Werkstücks und des zweiten Werkstücks von einem Soll-Laufverhalten des ersten Werkstücks und des zweiten Werkstücks abweicht, während das erste Werkstück und das zweite Werkstück vorzugsweise relativ zueinander derart gesteuert werden, dass die erste Verzahnung des ersten Werkstücks und die zweite Verzahnung des zweiten Werkstücks sich im Eingriff befinden und vorzugsweise zumindest die erste Flanke der ersten Verzahnung mit der ersten Gegenflanke der zweiten Verzahnung abrollend zusammenwirkt.

Dies hat den Vorteil, dass die Werkzeugmaschine ein Laufverhalten-Prüfmittel umfasst, das insbesondere einen oder mehrere akustische Aufnehmer, gegebenenfalls vorzugsweise zumindest einen akustischen Aufnehmer an der Arbeitsspindel bzw. an einem Aufnahmemittel der Steuervorrichtung der Werkzeugmaschine, aufweist, so dass bei Einspannung des ersten Werkstücks an der Werkzeugmaschine ein Laufverhalten eines Verzahnungspaares ermittelt werden kann, insbesondere durch Ermitteln bzw. Aufnehmen von Laufgeräuschen, die entstehen, wenn das erste und das zweite Werkstück als Verzahnungspaar bei im Eingriff befindlicher Verzahnung gesteuert werden können, so dass eine erste Flanke der ersten Verzahnung des ersten Werkstücks jeweils mit einer ersten Gegenflanke der zweiten Verzahnung des zweiten Werkstücks abrollend zusammenwirkt, wie es in einem späteren Betrieb des Verzahnungspaares vorgesehen ist. Dies hat den Vorteil, dass die Prüfung des Laufverhaltens bzw. die Prüfung der Laufgeräusche des Verzahnungspaares an der Werkzeugmaschine ermittelt werden kann.

Vorzugsweise umfasst das Laufverhalten-Prüfmittel einen oder mehrere Vibrationssensoren und ist vorzugsweise dazu geeignet, durch Ermitteln von beim Antreiben des ersten Werkstücks und des zweiten Werkstücks entstehenden Vibrationen vorzugsweise durch die einen oder mehreren Vibrationssensoren zu ermitteln, ob ein gemeinsames Laufverhalten des ersten Werkstücks und des zweiten Werkstücks von einem Soll-Laufverhalten des ersten Werkstücks und des zweiten Werkstücks abweicht, während das erste Werkstück und das zweite Werkstück vorzugsweise relativ zueinander derart gesteuert werden, dass die erste Verzahnung des ersten Werkstücks und die zweite Verzahnung des zweiten Werkstücks sich im Eingriff befinden und vorzugsweise zumindest die erste Flanke der ersten Verzahnung mit der ersten Gegenflanke der zweiten Verzahnung abrollend zusammenwirkt.

Dies hat den Vorteil, dass anstatt oder neben der Ermittelung des Laufverhaltens durch akustische Aufnehmer weiterhin ein Laufverhalten des Verzahnungspaares ermittelt werden kann, indem durch einen oder mehrere Vibrationssensoren Vibrationen, insbesondere entstehende Vibrationen bei einem Laufverhalten oder Abrollverhalten der Flanken auf Gegenflanken, ermittelt werden können, während das erste und das zweite Werkstück bei im Eingriff befindlichen Verzahnungen relativ zueinander gesteuert werden.

Die vorstehend beschriebenen Prüfungen des Laufverhaltens des ersten Werkstücks und des zweiten Werkstücks relativ zueinander ermöglichen es insgesamt, eine Abweichung von der Soll-Verzahnungsgeometrie festzustellen, wenn der Geräuschpegel des Laufverhaltens bzw. der Laufgeräusche, gegebenenfalls zeitweise oberhalb eines der Soll-Verzahnungsgeometrie entsprechenden Geräuschpegels ist, oder wenn Vibrationen festgestellt werden, die darauf hindeuten, dass eine Flankenform entsprechend der Soll-Verzahnungsgeometrie nicht bzw. noch nicht erreicht ist.

Vorzugsweise ist die Werkzeugmaschine dazu geeignet, das in dem Einspannmittel eingespannte erste Werkstück an der Werkzeugmaschine durch ein in der Steuervorrichtung mit einem Aufnahmemittel aufgenommenes Werkzeug nachzubearbeiten, vorzugsweise wenn das Prüfsystem nach und/oder während der Bearbeitung des ersten Werkstücks an der Werkzeugmaschine ermittelt, dass eine momentane Geometrie, insbesondere eine momentane Zahnflankengeometrie und/oder momentane Zahnlückengeometrie, der ersten Verzahnung des ersten Werkstücks von einer Soll-Verzahnungsgeometrie, insbesondere von einer Soll-Zahnflankengeometrie und/oder Soll-Zahnlückengeometrie, der ersten Verzahnung des ersten Werkstücks abweicht.

Dies hat den Vorteil, dass die Werkzeugmaschine dazu geeignet ist, das in dem Einspannmittel eingespannte erste Werkstück nachzubearbeiten, wenn eine Abweichung der momentanen Verzahnungsgeometrie von der vorgegebenen Soll-Verzahnungsgeometrie ermittelt wird, ohne dass das erste Werkstück ein- bzw. ausgespannt werden muss.

Somit ist die Werkzeugmaschine insbesondere dazu geeignet, eine Komplettbearbeitung eines eine Verzahnung aufweisenden Werkstücks zu ermöglichen, indem das Werkstück an der Werkzeugmaschine von einem Rohteil zu einem Fertigteil bearbeitet werden kann, wobei die Komplettbearbeitung gegebenenfalls Vorarbeiten umfasst und des Weiteren ein Fertigen der Verzahnungsform auf dem ersten Werkstück umfasst, wobei die Werkzeugmaschine dazu geeignet ist, nach und/oder während der Bearbeitung des ersten Werkstücks an der Werkzeugmaschine ohne ein erforderliches Ein- oder Ausspannen des Werkstücks eine Prüfung der Verzahnungsform anhand einer Soll-Verzahnungsgeometrie durchzuführen, und gegebenenfalls Nacharbeiten durchzuführen, um eine angestrebte Oberflächengüte, angestrebte Verzahnungsqualität, insbesondere eine angestrebte Soll-Verzahnungsgeometrie, zu erreichen. Wird hierbei insbesondere festgestellt, dass die momentane Verzahnungsgeometrie der ersten Verzahnung des ersten Werkstücks der angestrebten Soll-Verzahnungsgeometrie entspricht, oder wenn ermittelt wird, dass die Abweichung zwischen der momentanen Verzahnungsgeometrie und der Soll-Verzahnungsgeometrie eine vorbestimmte Maximalabweichung unterschreitet, deutet das darauf hin, dass das erste Werkstück, bzw. die erste Verzahnung auf dem ersten Werkstück der Vorgabe durch die Soll-Verzahnungsgeometrie entspricht.

Das erfindungsgemäße Verfahren zum Bearbeiten von einem Werkstück mittels eines oder mehrerer anhand von Steuerdaten gesteuerten Werkzeuge durch Zerspanen an einer wie vorstehend beschriebenen Werkzeugmaschine nach der vorliegenden Erfindung umfasst die Verfahrenschritte:
□ Bestimmen einer Soll-Verzahnungsgeometrie, insbesondere einer Soll-Zahnflankengeometrie und/oder Soll-Zahnlückengeometrie, der ersten Verzahnung des ersten Werkstücks, und
□ Bearbeiten eines in dem Einspannmittel der Werkzeugmaschine eingespannten ersten Werkstücks, um eine erste Verzahnung auf dem ersten Werkstück anhand der bestimmten Soll-Verzahnungsgeometrie zu fertigen, wobei das erste Werkstück ein Gegenstück zu einem eine zweite Verzahnung aufweisenden zweiten Werkstück ist, derart dass eine erste Zahnflanke der ersten Verzahnung eine Gegenflanke einer zweiten Zahnflanke der zweiten Verzahnung bildet.

Das erfindungsgemäße Verfahren ist insbesondere gekennzeichnet durch den Verfahrensschritt Ermitteln nach und/oder während der Bearbeitung des ersten Werkstücks an der Werkzeugmaschine, ob eine momentane Geometrie, insbesondere eine momentane Zahnflankengeometrie und/oder momentane Zahnlückengeometrie, der ersten Verzahnung des ersten Werkstücks von der bestimmten Soll-Verzahnungsgeometrie, insbesondere von einer Soll-Zahnflankengeometrie und/oder Soll-Zahnlückengeometrie, der ersten Verzahnung des ersten Werkstücks abweicht.

Vorzugsweise umfasst das erfindungsgemäße Verfahren weiterhin einen oder mehreren der Verfahrenschritte:
□ mechanisches Abtasten einer Zahnflankenseite der ersten Verzahnung des ersten Werkstücks mittels eines Messtasters, um festzustellen, ob die momentane Verzahnungsgeometrie der ersten Verzahnung des ersten Werkstücks von der Soll-Verzahnungsgeometrie der ersten Verzahnung des ersten Werkstücks abweicht,
□ optisches Abtasten einer Zahnflankenseite der ersten Verzahnung (des ersten Werkstücks, um festzustellen, ob die momentane Verzahnungsgeometrie der ersten Verzahnung des ersten Werkstücks von der Soll-Verzahnungsgeometrie der ersten Verzahnung des ersten Werkstücks abweicht, und
□ Dinduktives Abtasten einer Zahnflankenseite der ersten Verzahnung des ersten Werkstücks, um festzustellen, ob die momentane Verzahnungsgeometrie der ersten Verzahnung des ersten Werkstücks von der Soll-Verzahnungsgeometrie der ersten Verzahnung des ersten Werkstücks abweicht.

Vorzugsweise umfasst das Verfahren weiterhin die Verfahrenschritte:
□ Aufnehmen des zweiten Werkstücks vorzugsweise in dem Aufnahmemittel der Werkzeugmaschine,
□ Steuern des in dem Aufnahmemittel aufgenommenen zweiten Werkstücks und des in dem Einspannmittel eingespannten ersten Werkstücks relativ zueinander derart, dass die erste Verzahnung des ersten Werkstücks und die zweite Verzahnung des zweiten Werkstücks sich vorzugsweise im Eingriff befinden und vorzugsweise zumindest eine erste Flanke der ersten Verzahnung mit zumindest einer ersten Gegenflanke der zweiten Verzahnung zusammenwirkt, und/oder
□ Ermitteln des Tragbilds zwischen der ersten Flanke der ersten Verzahnung und der ersten Gegenflanke der zweiten Verzahnung vorzugsweise mittels Touchieren.

Vorzugsweise umfasst das Verfahren weiterhin die Verfahrenschritte:
□ Aufnehmen des zweiten Werkstücks in dem Aufnahmemittel der Werkzeugmaschine,
□ Steuern des in dem Aufnahmemittel aufgenommenen zweiten Werkstücks und des in dem Einspannmittel eingespannten ersten Werkstücks vorzugsweise relativ zueinander derart, dass die erste Verzahnung des ersten Werkstücks und die zweite Verzahnung des zweiten Werkstücks sich vorzugsweise im Eingriff befinden und vorzugsweise zumindest eine erste Flanke der ersten Verzahnung mit zumindest einer ersten Gegenflanke der zweiten Verzahnung vorzugsweise abrollend zusammenwirkt, und/oder
□ Ermitteln, ob ein gemeinsames Laufverhalten des ersten Werkstücks und des zweiten Werkstücks von einem Soll-Laufverhalten des ersten Werkstücks und des zweiten Werkstücks abweicht, vorzugsweise während das erste Werkstück und das zweite Werkstück relativ zueinander derart gesteuert werden, dass die erste Verzahnung des ersten Werkstücks und die zweite Verzahnung des zweiten Werkstücks sich vorzugsweise im Eingriff befinden und vorzugsweise zumindest die erste Flanke der ersten Verzahnung mit der ersten Gegenflanke der zweiten Verzahnung vorzugsweise abrollend zusammenwirkt.

Vorzugsweise umfasst das Verfahren weiterhin den Verfahrenschritt Nachbearbeiten des vorzugsweise in dem Einspannmittel der Werkzeugmaschine eingespannten ersten Werkstücks, vorzugsweise wenn nach und/oder während der Bearbeitung des ersten Werkstücks an der Werkzeugmaschine ermittelt wird, dass eine momentane Geometrie, insbesondere eine momentane Zahnflankengeometrie und/oder momentane Zahnlückengeometrie, der ersten Verzahnung des ersten Werkstücks von der bestimmten Soll-Verzahnungsgeometrie, insbesondere von einer Soll-Zahnflankengeometrie und/oder Soll-Zahnlückengeometrie, der ersten Verzahnung des ersten Werkstücks abweicht.

Somit wird ein Verfahren für eine Komplettbearbeitung eines ersten Werkstücks an einer erfindungsgemäßen Werkzeugmaschine bereitgestellt, bei dem insbesondere die Bearbeitung an der Werkzeugmaschine eine Fertigbearbeitung einer ersten Verzahnung auf dem ersten Werkstück ermöglicht, inklusive einer Qualitätsprüfung der momentanen Verzahnungsgeometrie an der Werkzeugmaschine, ohne ein erforderliches Ein- oder Ausspannen des ersten Werkstücks, und inklusive einer möglichen Nachbearbeitung, wenn ermittelt wird, dass die momentane Verzahnungsgeometrie von einer vorgegebenen Soll-Verzahnungsgeometrie abweicht.

### Kurzbeschreibung der Figuren

Fig. 1 zeigt eine Werkzeugmaschine zum Bearbeiten eines ersten Werkstücks nach einem Ausführungsbeispiel der vorliegenden Erfindung.
Fig. 2 zeigt eine Werkzeugmaschine zum Bearbeiten eines ersten Werkstücks nach einem Ausführungsbeispiel der vorliegenden Erfindung.
Fig. 3 zeigt eine Werkzeugmaschine zum Bearbeiten eines ersten Werkstücks nach einem Ausführungsbeispiel der vorliegenden Erfindung.

### Detaillierte Beschreibung der Figuren und bevorzugter Ausführungsbeispiele der vorliegenden Erfindung

Im Folgenden wird die vorliegende Erfindung detailliert anhand von Ausführungsbeispielen einer Werkzeugmaschine zum Bearbeiten von einem Werkstück mittels eines oder mehrerer, anhand von Steuerdaten gesteuerter Werkzeuge durch Zerspanen mit zumindest 5 Achsen anhand beispielhafter Figuren beschrieben und erläutert, wobei zusätzlich entsprechende Ausführungsbeispiele des erfindungsgemäßen Verfahrens zum Bearbeiten von einem Werkstück an einer derartigen Werkzeugmaschine beschrieben werden.

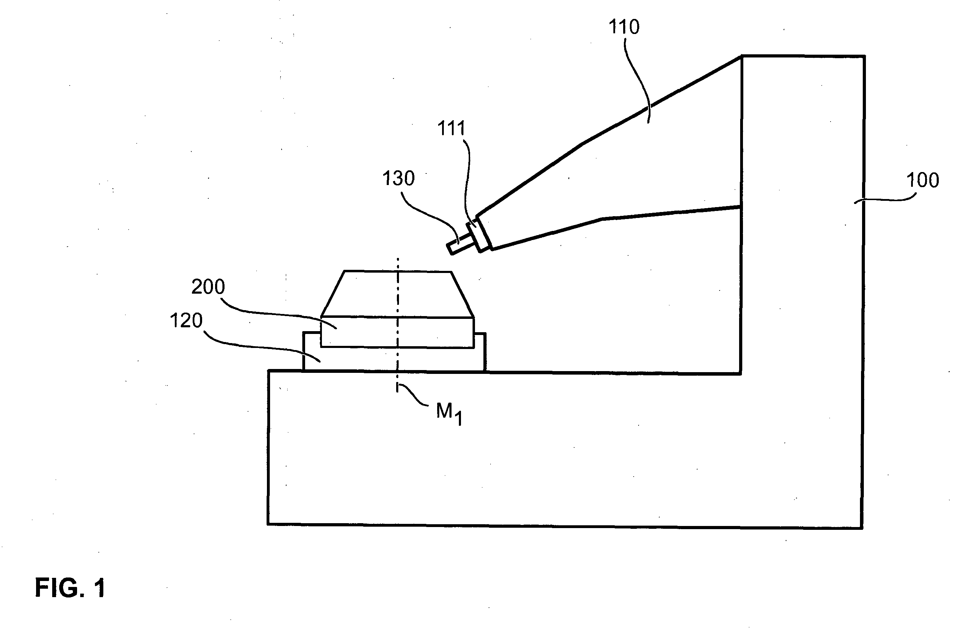

Ein erstes Ausführungsbeispiel einer zumindest 5 Achsen umfassenden Werkzeugmaschine 100 ist in Fig. 1 schematisch dargestellt. Die Werkzeugmaschine 100 umfasst eine Steuervorrichtung 110 mit einem Aufnahmemittel 111. Das Aufnahmemittel 111 der Steuervorrichtung 110 ist dazu geeignet, ein Werkzeug 130 der Werkzeugmaschine 100 aufzunehmen. Hierbei ist die Steuervorrichtung 110 mit dem Aufnahmemittel 111 insbesondere dazu geeignet, ein Werkzeug 130 der Werkzeugmaschine 100 derart anzutreiben, dass das Werkzeug 130 um eine Rotationsachse des Werkzeugs 130 rotiert, um dazu geeignet zu sein, durch Zerspanen Material von einem in der Werkzeugmaschine 100 zu bearbeitenden Werkstück 200 abzutragen. Hierfür ist die Werkzeugmaschine 100 insbesondere dazu geeignet, das Werkzeug 130 mittels der Steuervorrichtung 110 entlang von durch Steuerdaten vorgegebenen Werkzeugbahnen Material von dem Werkstück 200 abzutragen.

Des Weiteren umfasst die Werkzeugmaschine 100 ein Einspannmittel 120, das dazu geeignet ist, das auf der Werkzeugmaschine 100 zu bearbeitende Werkstück 200 einzuspannen, so dass dieses von der Steuervorrichtung 110 durch Steuern des Werkzeugs 130 bearbeitet werden kann. Hierfür ist das Einspannmittel 120 nach diesem Ausführungsbeispiel der vorliegenden Erfindung zumindest dazu geeignet, über eine Rundachse der Werkzeugmaschine 100 das in dem Einspannmittel 120 eingespannte Werkstück 200 rotatorisch um eine Mittelachse M₁ des Werkstücks 200 anzutreiben.

Insgesamt handelt es sich nach diesem Ausführungsbeispiel der vorliegenden Erfindung um eine zumindest 5 Achsen umfassende Werkzeugmaschine 100, wobei die Werkzeugmaschine 100 insgesamt dazu geeignet ist, das Werkzeug 130 relativ zu dem Werkstück 200 in zumindest 5 Bewegungsfreiheitsgraden durch die zumindest 5 Achsen der Werkzeugmaschine 100 simultan anzusteuern. Der Antrieb erfolgt hierbei zumindest über die 5 Achsen der Werkzeugmaschine 100, insbesondere zumindest 3 Linearachsen und zumindest 2 Rundachsen.

Bei dem in Fig. 1 dargestellten Werkstück 200 handelt es sich um das erste Werkstück 200, das in dem Einspannmittel 120 eingespannt ist, wobei das erste Werkstück nach diesem Ausführungsbeispiel der vorliegenden Erfindung insbesondere ein Werkstück ist, das an der Werkzeugmaschine 100 von einem Rohteil in ein Fertigteil zu bearbeiten ist, wobei als Fertigteil nach diesen Ausführungsbeispiel der Werkzeugmaschine 100 (und des entsprechend beschriebenen Verfahrens) das angestrebte Fertigteil nach Fertigbearbeitung an der Werkzeugmaschine 100 ein Kegelrad ist, wobei das in Fig. 1 dargestellte erste Werkstück 200 das Werkstück in einem momentanen Fertigungszustand bzw. Bearbeitungszustand zeigt, in dem nur ein Grundkörper, entsprechend einem Kopfkörper des späteren Kegelrades, in dem Einspannmittel 120 eingespannt ist. Gegebenenfalls wurde das erste Werkstück 200 in Fig. 1 bereits aus einem Rohteil zerspanend an der Werkzeugmaschine 100 gefertigt bzw. bearbeitet.

Nach einem gegebenenfalls automatischen bzw. programmgesteuerten Werkzeugwechsel in der Werkzeugmaschine 100 wird das erste Werkstück 200 nun an der Werkzeugmaschine 100 derart bearbeitet, dass durch das von der Steuervorrichtung 110 gesteuerte Werkzeug 130 und gegebenenfalls durch weitere Werkzeuge eine Verzahnung, insbesondere eine erste Verzahnung, auf dem ersten Werkstück 200 gefertigt wird, entsprechend einer zuvor vorgegebenen Soll-Verzahnungsgeometrie.

Hierbei ist es insbesondere aufgrund der 5 Freiheitsgrade der steuerbaren Relativbewegung zwischen dem Werkzeug 130 und dem ersten Werkstück 200 möglich, an der Werkzeugmaschine 100 beliebig komplexe Verzahnungsformen, insbesondere beliebig komplexe Zahnflankengeometrien und Zahnlückengeometrien auf dem ersten Werkstück 200 zerspanend zu fertigen.

Insbesondere ermöglicht die hohe Flexibilität der Werkzeugsteuerung relativ zu dem Werkstück 200 an der programmgesteuerten CNC-Werkzeugmaschine 100 eine automatisierte und programmgesteuerte Fertigung von eine Verzahnung aufweisenden Werkstücken, insbesondere Stirnrädern mit Innen- und/oder Außenverzahnung, Zahnstangen oder Kegelzahnrädern, gegebenenfalls mit automatisierten, programmgesteuerten Werkzeugwechseln und/oder automatisieren, programmgesteuerten Werkstückwechseln.

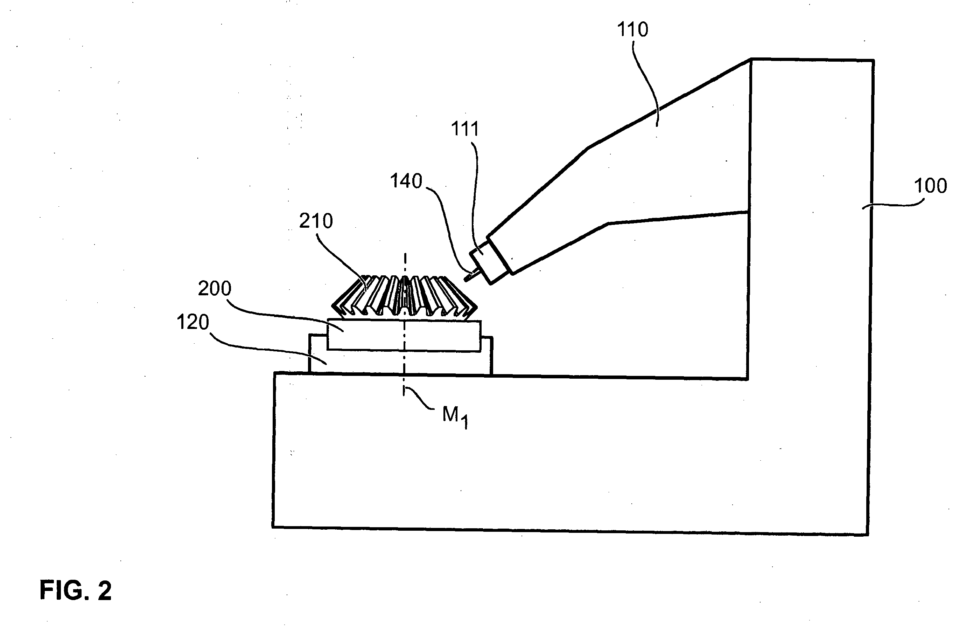

Ein Ausführungsbeispiel der vorliegenden Erfindung ist in Fig. 2 schematisch dargestellt, wobei Fig. 2 eine Werkzeugmaschine 100 zeigt, die eine Steuervorrichtung 110 mit einem Aufnahmemittel 111 zeigt, wobei die Werkzeugmaschine 100 weiterhin analog zu der Werkzeugmaschine 100 aus Fig. 1 ein Einspannmittel 120 umfasst, in das ein erstes Werkstück 200 eingespannt ist, das eine erste Verzahnung 210 aufweist. Beispielsweise handelt es sich bei dem ersten Werkstück 200 in Fig. 2 um das Werkstück 200 aus Fig. 1, nachdem das Werkstück 200 in Fig. 1 mit dem Werkzeug 130 bearbeitet wurde. Das Einspannmittel 120 ist dazu geeignet, das erste Werkstück 200 mit der ersten Verzahnung 210 um eine Mittelachse des ersten Werkstück 200, dargestellt durch die Achse M₁, rotatorisch anzutreiben, wobei die Mittelachse M₁ des ersten Werkstücks 200 einer Rotationsachse entspricht, an die das erste Werkstück 200, das in Fig. 2 beispielhaft ein Kegelzahnrad ist, bei einem späteren Betrieb zusammenwirkend mit einem eine Gegenverzahnung zu der ersten Verzahnung 210 aufweisenden Fertigteil, z. B. einem Gegenzahnrad zu dem Kegelzahnrad, bei ineinandergreifender Verzahnung des Kegelzahnrads mit der Verzahnung des entsprechenden Gegenzahnrads rotiert.

In Fig. 2 ist in das Aufnahmemittel 111 der Werkzeugmaschine 100 ein Messtaster 140 aufgenommen, der dazu geeignet ist, eine Oberfläche des ersten Werkstücks 200 durch mechanisches Abtasten zu vermessen, gegebenenfalls an mehreren Punkten der Oberfläche in unterschiedlichen Winkellagen relativ zu dem ersten Werkstück 200. Insbesondere ist der Messtaster 140 dazu geeignet, durch geeignete Ansteuerung mittels der Steuervorrichtung 110 in unterschiedlichen Winkellagen eine oder mehrere Flanken bzw. Flankenseiten der ersten Verzahnung 210 des ersten Werkstücks 200 in dem momentanen, in Fig. 2 dargestellten Bearbeitungszustand mechanisch abzutasten, um zu ermitteln, ob die momentane Verzahnungsgeometrie der ersten Verzahnung 210, insbesondere die Geometrie der Zahnflanken bzw. Zahnlücken, der vorgegebenen Soll-Verzahnungsgeometrie mit der geforderten Balligkeit bzw. geforderten Krümmung der Zahnflanken mit dem gewünschten Zahnflankenverlauf in radialer Richtung entspricht, oder ob die momentane Verzahnungsgeometrie von der vorgegebenen Soll-Verzahnungsgeometrie abweicht. Hierzu kann der Messtaster 140 in unterschiedlichen Winkellagen die Oberfläche des ersten Werkstücks 200 abfahren, indem das erste Werkstück 200 zu dem Messtaster 140 relativ an der Werkzeugmaschine 100 durch Antreiben der Steuervorrichtung 110 und/oder des Einspannmittels 120 über eine oder mehrere der zumindest 5 Achsen der Werkzeugmaschine 100, insbesondere der zumindest 3 Linearachsen und zumindest 2 Rundachsen, gesteuert wird.

Die Werkzeugmaschine 100 umfasst somit ein Prüfsystem, das dazu geeignet ist zu ermitteln, ob die momentane Geometrie der ersten Verzahnung 210 des ersten Werkstücks 200 von der vorgegebenen Soll-Verzahnungsgeometrie abweicht, wobei in diesem Ausführungsbeispiel nach und/oder während der Bearbeitung des ersten Werkstücks 200 an der Werkzeugmaschine 100 durch mechanisches Abtasten mittels des Messtasters 140 geprüft bzw. ermittelt werden kann, ob die momentane Verzahnungsgeometrie in dem momentanen Bearbeitungszustand des ersten Werkstücks 200 der vorgegebenen Soll-Verzahnungsgeometrie entspricht, oder davon abweicht.

Die vorliegende Erfindung ist jedoch nicht darauf beschränkt, eine momentane Verzahnungsgeometrie durch mechanisches Abtasten mittels eines Messtasters 140 auszuführen, sondern vielmehr ist es weiterhin möglich, Werkzeugmaschinen 100 bereitzustellen, die ein erfindungsgemäßes Prüfsystem umfassen, das Messtastmittel umfasst, die dazu geeignet sind, durch optisches oder induktives Abtasten einer Zahnflankenseite der ersten Verzahnung des Werkstücks zu ermitteln, ob die momentane Geometrie der ersten Verzahnung des ersten Werkstücks von der Soll-Verzahnungsgeometrie der ersten Verzahnung 210 des ersten Werkstücks 200 abweicht. Des Weiteren ist es möglich, Werkzeugmaschinen 100 bereitzustellen, die Messtastmittel umfassen, die es ermöglichen, durch eine Kombination von mechanischem, optischem und/oder induktivem Abtasten einer Zahnflankenseite der ersten Verzahnung 210 Abweichungen zu der vorgegebenen Soll-Verzahnungsgeometrie ermitteln zu können. Optisches Abtasten kann hierbei z. B. mittels eines Laserstrahls in verschiedenen Winkelanstellungen relativ zu dem Werkstück erfolgen.

Insbesondere ist es möglich, wenn festgestellt bzw. ermittelt wird, dass die momentane Verzahnungsgeometrie der ersten Verzahnung 210 von der Soll-Verzahnungsgeometrie abweicht, automatisiert einen Werkzeugwechsel durchzuführen, wobei z. B. der in dem Aufnahmemittel 111 aufgenommene Messtaster 140 in Fig. 2 durch das in Fig. 1 dargestellte Werkzeug 130 oder ein anderes Werkzeug eines Werkzeugmagazins der Werkzeugmaschine 100 ausgewechselt wird, um das in dem Einspannmittel 120 eingespannte erste Werkstück 200 gegebenenfalls weiter- bzw. nachzubearbeiten, um die momentane Verzahnungsgeometrie des ersten Werkstücks 200 an die Soll-Verzahnungsgeometrie anzunähern, bis diese der Soll-Verzahnungsgeometrie entspricht, oder zumindest von dieser um weniger als eine vorgegebenen Maximalabweichung davon abweicht. Insbesondere betrifft dies eine Abweichung einer momentanen Oberflächengüte der Zahnflanken von einer Soll-Oberflächengüte und/oder einer momentanen bzw. momentan ermittelten Verzahnungsqualität von einer Soll-Verzahnungsqualität.

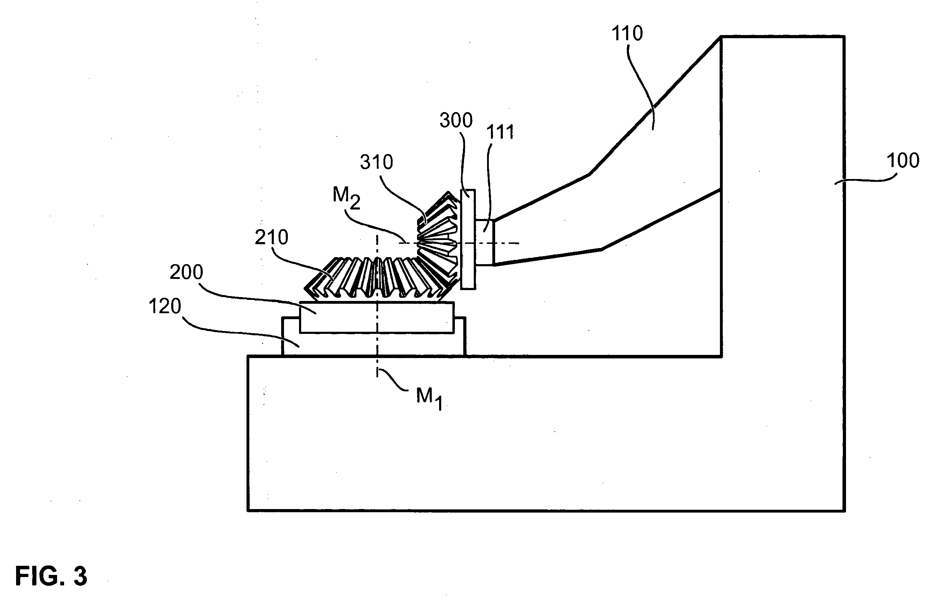

In einem weiteren Ausführungsbeispiel der vorliegenden Erfindung kann des Weiteren eine Werkzeugmaschine 100 bereitgestellt werden, an der bereits, ohne das erste Werkstück 200 aus dem Einspannmittel 120 auszuspannen, ein Laufverhalten des ersten Werkstücks 200 geprüft bzw. ermittelt werden kann. Fig. 3 zeigt hierbei beispielhaft ein Kegelzahnrad, das als erstes Werkstück 200 mit der ersten Verzahnung 210 in das Einspannmittel 120 eingespannt ist, wobei das Einspannmittel 120 dazu geeignet ist, das Kegelzahnrad 200 um die Mittelachse M₁ rotatorisch anzutreiben, wobei die Mittelachse M₁ der Rotationsachse des Kegelzahnrads 200 entspricht.

Die in Fig. 3 dargestellte Werkzeugmaschine 100 nach einem Ausführungsbeispiel der vorliegenden Erfindung ist dazu geeignet, mit einem Aufnahmemittel 111 einer Steuervorrichtung 110 ein zweites Werkstück 300 mit einer Verzahnung 310 aufzunehmen, und dies um eine Mittelachse M₂ des zweiten Werkstücks 300 rotatorisch anzutreiben. Beispielhaft handelt es sich bei dem zweiten Werkstück 300 in Fig. 3 um ein Kegelzahnrad, bzw. ein Ritzel, das mit dem Kegelzahnrad 200 ein Zahnradpaar bildet, oder zumindest ein Zahnradpaar bilden soll, unter der für dieses Ausführungsbeispiel beispielhaft angenommenen Voraussetzung, dass die erste Verzahnung 210 des Kegelzahnrads 200 im Wesentlichen der vorgegebenen Soll-Verzahnungsgeometrie entspricht. Bei dem Kegelzahnrad 300, im als Folgenden Ritzel 300 bezeichnet, handelt es sich hierbei somit beispielhaft um ein Test-Ritzel oder um ein Werkstück, das gegebenenfalls zuvor ebenfalls programmgesteuert an der Werkzeugmaschine 100 gefertigt bzw. bearbeitet wurde.

Die Steuervorrichtung 110 und das Einspannmittel 120 der Werkzeugmaschine 100 ermöglichen es, durch die freie Beweglichkeit bzw. Steuerbarkeit in 5 Bewegungsfreiheitsgraden durch simultanes Ansteuern der zumindest 5 Achsen der Werkzeugmaschine 100, das Ritzel 300 und das Kegelzahnrad 200 derart relativ zueinander in Eingriff zu bringen, das die erste Verzahnung 210 des Kegelzahnrads 200 und die zweite Verzahnung 310 des Ritzels 300 ineinandergreifen, bzw. sich im Eingriff befinden, derart, dass eine erste Flanke der ersten Verzahnung 210 mit einer entsprechenden ersten Gegenflanke der zweiten Verzahnung 310 zusammenwirkt.

Die Werkzeugmaschine 100 nach einem Ausführungsbeispiel der vorliegenden Erfindung umfasst weiterhin Mittel, die es ermöglichen, zumindest auf eine erste Gegenflanke der zweiten Verzahnung 310 oder auf zumindest eine erste Flanke der ersten Verzahnung 210 Farbe aufzutragen, derart, dass durch Tuschieren ein Tragbild ermittelt werden kann, indem die Steuervorrichtung 110 das Ritzel 300 mit dem Kegelzahnrad 200 derart in Eingriff bringt, dass die erste Gegenflanke der zweiten Verzahnung 310 mit der ersten Flanke der ersten Verzahnung 210 derart zusammenwirkt, dass von der ersten Gegenflanke auf die erste Flanke oder von der ersten Flanke auf die erste Gegenflanke Farbe übertragen wird, wobei durch ein optisches Erkennungsmittel der Werkzeugmaschine 100 anhand einer Form der übertragenen Farbe auf der ersten Flanke oder der ersten Gegenflanke dazu geeignet ist, durch optische Erkennung ein Tragbild zu ermitteln.

Nach einem weiteren Ausführungsbeispiel der vorliegenden Erfindung ist die Werkzeugmaschine 100 in Fig. 3 zusätzlich dazu geeignet, das Ritzel 300 und das Kegelzahnrad 200 derart durch die zumindest 5 Achsen der Werkzeugmaschine 100 simultan anzusteuern, dass das Ritzel 300 mit dem Kegelzahnrad 200 mit zusammenwirkenden Verzahnungen in Eingriff gebracht wird, wobei das Ritzel 300 durch eine Rundachse der Steuervorrichtung 110 um die Mittelachse M₂ des Ritzels 300 rotatorisch angetrieben wird, und das Kegelzahnrad 200 durch eine Rundachse des Einspannmittels 120 rotatorisch um die Mittelachse M₁ des Kegelzahnrads 200 angetrieben wird, derart, dass das Ritzel 300 und das Kegelzahnrad 200 entsprechend eines späteren Betriebs als Zahnradpaar gesteuert werden, wobei jeweils zumindest eine erste Flanke der ersten Verzahnung 210 des Kegelzahnrads 200 mit einer ersten Gegenflanke der zweiten Verzahnung 310 des Ritzels 300 abrollend zusammenwirkt, bzw. im Wesentlichen abrollend zusammenwirkt, wenn ein tatsächliches Abrollen nur bei erreichter Soll-Verzahnungsgeometrie erreicht werden kann (beispielsweise durch optimalen Krümmungsverlauf des Zahnflankenprofils).

Nach diesem Ausführungsbeispiel des vorliegenden Erfindung umfasst die Werkzeugmaschine 100 bzw. das Prüfsystem der Werkzeugmaschine 100 des Weiteren akustische Aufnehmer und Vibrationssensoren, insbesondere zumindest einen akustischen Aufnehmer und einen Vibrationssensor an der Steuervorrichtung 110, so dass ein Laufverhalten des aus dem Kegelzahnrad 200 und dem Ritzel 300 gebildeten Zahnradpaares geprüft, bzw. ermittelt werden kann, indem über die akustischen Aufnehmer des Prüfsystems ein Laufgeräusch bzw. Laufgeräusche beim Antreiben des Ritzels 300 und des Kegelzahnrads 200 relativ zueinander ermittelt werden und mit einem gegebenenfalls vorgegebenen Soll-Laufgeräuschs, gegebenenfalls anhand eines Soll-Geräuschpegels, verglichen werden können. Des Weiteren sind die Vibrationssensoren dazu geeignet, bei dem Abrollen der ersten Gegenflanke auf der ersten Flanke beim Antreiben des Zahnradpaares aus Kegelzahnrad 200 und Ritzel 300 Vibrationen zu messen, anhand derer eine momentan vorliegende Oberflächengüte bzw. Verzahnungsqualität oder eine Abweichung zwischen momentaner Verzahnungsgeometrie und Soll-Verzahnungsgeometrie ermittelt werden kann.

Auch in diesem Ausführungsbeispiel der vorliegenden Erfindung ist es möglich, an der Werkzeugmaschine 100 das Ritzel 300 mit einem Werkzeug 130, insbesondere beispielsweise mit dem Werkzeug 130, auszuwechseln, um automatisiert das Kegelzahnrad 200 bzw. die erste Verzahnung 210 des Kegelzahnrads 200 nachzubearbeiten, wenn bei der Prüfung des Laufverhaltens oder bei dem Ermitteln des Tragbildes wie vorstehend beschrieben ermittelt wird, dass die momentane Verzahnungsgeometrie der ersten Verzahnung 210 von der Soll-Verzahnungsgeometrie abweicht.

Die vorliegende Erfindung ist jedoch nicht auf die vorstehend beschriebenen Ausführungsbeispiele beschränkt, sondern vielmehr können die einzelnen Aspekte bzw. einzelnen Merkmale der vorstehend beschriebenen Ausführungsbeispiele kombiniert werden, um weitere Ausführungsbeispiele der vorliegenden Erfindung, insbesondere weitere Ausführungsbeispiele der Werkzeugmaschine 100 nach der vorliegenden Erfindung bzw. des Verfahrens nach der vorliegenden Erfindung bereitzustellen.

Wie vorstehend beschrieben, stellt die vorliegende Erfindung insbesondere eine Werkzeugmaschine 100 und ein Verfahren zum Bearbeiten eines Werkstücks 200 an einer Werkzeugmaschine 100 bereit, welche eine Komplettbearbeitung eines Werkstücks von einem Rohteil in ein Fertigteil mit einer Verzahnung ermöglicht, wobei die Werkzeugmaschine insbesondere zusätzlich ermöglicht, dass eine momentane Verzahnungsgeometrie des Werkstücks nach und/oder während der Bearbeitung des Werkstücks an der Werkzeugmaschine überprüft werden kann, ob die momentane Verzahnungsgeometrie von einer vorgegebenen Soll-Verzahnungsgeometrie abweicht, wobei gegebenenfalls bei einer ermittelten Abweichung Nachbearbeitungen, gegebenenfalls automatisiert bzw. programmgesteuert, möglich sind. Hierbei ist es insbesondere besonders vorteilhaft nicht erforderlich, dass das Werkstück zur Überprüfung der Verzahnungsqualität bzw. der Oberflächengüte, bzw. der momentanen Verzahnungsgeometrie aus dem Einspannmittel 120 der Werkzeugmaschine 100 ausgespannt werden muss, um in einem externen Prüfsystem überprüft werden zu können.

## Patentansprüche

1. Werkzeugmaschine zum Bearbeiten von einem Werkstück (200; 300) mittels eines oder mehrerer anhand von Steuerdaten gesteuerten Werkzeuge (130) durch Zerspanen, wobei die Werkzeugmaschine (100) zumindest 5 simultan ansteuerbare Achsen umfasst, mit einem Einspannmittel (120) zum Einspannen des Werkstücks (200; 300) und, einer Steuervorrichtung (110) mit einem Aufnahmemittel (111) zum Aufnehmen eines der einen oder mehreren Werkzeuge (130), wobei die Steuervorrichtung (110) dazu geeignet ist, das in dem Aufnahmemittel (111) aufgenommene Werkzeug (130) anhand der Steuerdaten entlang einer Werkzeugbahn zum Abtragen von Material von dem in dem Einspannmittel (120) eingespannten Werkstück (200; 300) zu steuern,
wobei die Werkzeugmaschine (100) dazu geeignet ist, ein erstes Werkstück (200) zu bearbeiten, um eine erste Verzahnung (210) auf dem ersten Werkstück (200) zu fertigen, wobei das erste Werkstück (200) ein Gegenstück zu einem eine zweite Verzahnung (310) aufweisenden zweiten Werkstück (300) ist, derart dass eine erste Zahnflanke der ersten Verzahnung (210) eine Gegenflanke einer zweiten Zahnflanke der zweiten Verzahnung (310) bildet, und
wobei die Werkzeugmaschine (100) weiterhin ein Prüfsystem umfasst, das dazu geeignet ist, nach und/oder während der Bearbeitung des ersten Werkstücks (200) an der Werkzeugmaschine (100) zu ermitteln, ob eine momentane Geometrie, insbesondere eine momentane Zahnflankengeometrie und/oder momentane Zahnlückengeometrie, der ersten Verzahnung (210) des ersten Werkstücks (200) von einer Soll-Verzahnungsgeometrie, insbesondere von einer Soll-Zahnflankengeometrie und/oder Soll-Zahnlückengeometrie, der ersten Verzahnung (210) des ersten Werkstücks (200) abweicht,
**dadurch gekennzeichnet, dass**
das Aufnahmemittel (111) der Werkzeugmaschine (100) dazu eingerichtet ist, das zweite Werkstück (300) aufzunehmen, und
die Werkzeugmaschine (100) dazu geeignet ist, das in dem Aufnahmemittel (111) aufgenommene zweite Werkstück (300) und das in dem Einspannmittel (120) eingespannte erste Werkstück (200) relativ zueinander derart zu steuern, dass die erste Verzahnung (210) des ersten Werkstücks (200) und die zweite Verzahnung (310) des zweiten Werkstücks (300) sich im Eingriff befinden und zumindest eine erste Flanke der ersten Verzahnung (210) mit zumindest einer ersten Gegenflanke der zweiten Verzahnung (310) zusammenwirkt.

2. Werkzeugmaschine nach Anspruch 1, **dadurch gekennzeichnet, dass** das erste Werkstück (200), insbesondere im Fertigzustand nach Bearbeitung an der Werkzeugmaschine (100), ein Stirnzahnrad mit einer Innenverzahnung, ein Stirnzahnrad mit einer Außenverzahnung, eine Zahnstange, oder ein Kegelzahnrad ist und das zweite Werkstück (300), insbesondere im Fertigzustand nach Bearbeitung an der Werkzeugmaschine (100), ein Stirnzahnrad mit einer Innenverzahnung, ein Stirnzahnrad mit einer Außenverzahnung, eine Zahnstange, oder ein Kegelzahnrad ist, derart, dass das zweite Werkstück (300) ein Gegenstück zu dem ersten Werkstück (200) ist.

3. Werkzeugmaschine nach Anspruch 1 oder 2, **dadurch gekennzeichnet, dass** das Prüfsystem der Werkzeugmaschine (100) ein erstes Messtastmittel umfasst, das dazu geeignet ist, durch mechanisches Abtasten einer Zahnflankenseite der ersten Verzahnung (210) des ersten Werkstücks (200) mittels eines Messtasters (140) festzustellen, ob die momentane Verzahnungsgeometrie der ersten Verzahnung (210) des ersten Werkstücks (200) von der Soll-Verzahnungsgeometrie der ersten Verzahnung (210) des ersten Werkstücks (200) abweicht und/oder dass das Prüfsystem der Werkzeugmaschine (100) ein zweites Messtastmittel umfasst, das dazu geeignet ist, durch optisches und/oder induktives Abtasten einer Zahnflankenseite der ersten Verzahnung (210) des ersten Werkstücks (200) festzustellen, ob die momentane Geometrie der ersten Verzahnung (210) des ersten Werkstücks (200) von der Soll-Verzahnungsgeometrie, insbesondere von einer Soll-Zahnflankengeometrie und/oder Soll-Zahnlückengeometrie, der ersten Verzahnung (210) des ersten Werkstücks (200) abweicht.

4. Werkzeugmaschine nach zumindest einem der Ansprüche 1 bis 3, **dadurch gekennzeichnet, dass** das Prüfsystem der Werkzeugmaschine (100) eine Tragbild-Ermitteleinrichtung umfasst, die dazu geeignet ist, ein Tragbild zwischen der ersten Flanke der ersten Verzahnung (210) und der ersten Gegenflanke der zweiten Verzahnung (310) mittels Touchieren zu ermitteln.

5. Werkzeugmaschine nach zumindest einem der Ansprüche 1 bis 4, **dadurch gekennzeichnet, dass** das erste Werkstück (200) und/oder das zweite Werkstück (300) ein Zahnrad ist, insbesondere ein Kegelrad oder Stirnrad, und die Werkzeugmaschine (100) dazu geeignet ist, eine oder mehrere Rundachsen der Werkmaschine (100) zum Steuern des in dem Aufnahmemittel (111) aufgenommenen zweiten Werkstücks (300) und des in dem Einspannmittel (120) eingespannten ersten Werkstücks (200) relativ zueinander anzusteuern.

6. Werkzeugmaschine nach zumindest einem der Ansprüche 1 bis 5, **dadurch gekennzeichnet, dass** das erste Werkstück (200) ein Zahnrad ist, insbesondere ein Kegelrad oder Stirnrad, und das zweite Werkstück (300) ein Zahnrad ist, insbesondere ein Kegelrad oder Stirnrad,
wobei die Werkzeugmaschine (100) dazu geeignet ist, das erste Werkstück (200) rotatorisch um eine Mittelachse (M1) des ersten Werkstücks (200) mittels einer ersten Rundachse anzutreiben, die dazu geeignet ist, das Einspannmittel (120) der Werkzeugmaschine (100) rotatorisch anzutreiben, und/oder
wobei die Werkzeugmaschine (100) weiterhin dazu geeignet ist, das zweite Werkstück (300) rotatorisch um eine Mittelachse (M2) des zweiten Werkstücks (300) mittels einer zweiten Rundachse anzutreiben, die dazu geeignet ist, das Aufnahmemittel (111) der Werkzeugmaschine (100) rotatorisch anzutreiben.

7. Werkzeugmaschine nach zumindest einem der Ansprüche 1 bis 5, **dadurch gekennzeichnet, dass** das Prüfsystem der Werkzeugmaschine (100) weiterhin ein Laufverhalten-Prüfmittel umfasst, das dazu geeignet ist, zu ermitteln, ob ein gemeinsames Laufverhalten des ersten Werkstücks (200) und des zweiten Werkstücks (300) von einem Soll-Laufverhalten des ersten Werkstücks (200) und des zweiten Werkstücks (300) abweicht, während das erste Werkstück (200) und das zweite Werkstück (300) relativ zueinander derart gesteuert werden, dass die erste Verzahnung (210) des ersten Werkstücks (200) und die zweite Verzahnung (310) des zweiten Werkstücks (300) sich im Eingriff befinden und zumindest die erste Flanke der ersten Verzahnung (210) mit der ersten Gegenflanke der zweiten Verzahnung (310) abrollend zusammenwirkt.

8. Werkzeugmaschine nach Anspruch 7, **dadurch gekennzeichnet, dass** das Laufverhalten-Prüfmittel einen oder mehrere akustische Aufnehmer umfasst und dazu geeignet ist, durch Ermitteln eines beim Antreiben des ersten Werkstücks (200) und des zweiten Werkstücks (300) entstehenden Laufgeräusches durch die einen oder mehreren akustischen Aufnehmer zu ermitteln, ob ein gemeinsames Laufverhalten des ersten Werkstücks (200) und des zweiten Werkstücks (300) von einem Soll-Laufverhalten des ersten Werkstücks (200) und des zweiten Werkstücks (300) abweicht, während das erste Werkstück (200) und das zweite Werkstück (300) relativ zueinander derart gesteuert werden, dass die erste Verzahnung (210) des ersten Werkstücks (200) und die zweite Verzahnung (310) des zweiten Werkstücks (300) sich im Eingriff befinden und zumindest die erste Flanke der ersten Verzahnung (210) mit der ersten Gegenflanke der zweiten Verzahnung (310) abrollend zusammenwirkt und/oder dass das Laufverhalten-Prüfmittel einen oder mehrere Vibrationssensoren umfasst und dazu geeignet ist, durch Ermitteln von beim Antreiben des ersten Werkstücks (200) und des zweiten Werkstücks (300) entstehenden Vibrationen durch die einen oder mehreren Vibrationssensoren zu ermitteln, ob ein gemeinsames Laufverhalten des ersten Werkstücks (200) und des zweiten Werkstücks (300) von einem Soll-Laufverhalten des ersten Werkstücks (200) und des zweiten Werkstücks (300) abweicht, während das erste Werkstück (200) und das zweite Werkstück (300) relativ zueinander derart gesteuert werden, dass die erste Verzahnung (210) des ersten Werkstücks (200) und die zweite Verzahnung (310) des zweiten Werkstücks (300) sich im Eingriff befinden und zumindest die erste Flanke der ersten Verzahnung (210) mit der ersten Gegenflanke der zweiten Verzahnung (310) abrollend zusammenwirkt.

9. Werkzeugmaschine nach zumindest einem der Ansprüche 1 bis 8, **dadurch gekennzeichnet, dass** die Werkzeugmaschine dazu geeignet ist, das in dem Einspannmittel eingespannte erste Werkstück (200) an der Werkzeugmaschine durch ein in der Steuervorrichtung (110) mit einem Aufnahmemittel (111) aufgenommenes Werkzeug (130) nachzubearbeiten, wenn das Prüfsystem nach und/oder während der Bearbeitung des ersten Werkstücks (200) an der Werkzeugmaschine (100) ermittelt, dass eine momentane Geometrie, insbesondere eine momentane Zahnflankengeometrie und/oder momentane Zahnlückengeometrie, der ersten Verzahnung (210) des ersten Werkstücks (200) von einer Soll-Verzahnungsgeometrie, insbesondere von einer Soll-Zahnflankengeometrie und/oder Soll-Zahnlückengeometrie, der ersten Verzahnung (210) des ersten Werkstücks (200) abweicht.

10. Verfahren zum Bearbeiten von einem Werkstück mittels eines oder mehrerer anhand von Steuerdaten gesteuerten Werkzeuge durch Zerspanen an einer Werkzeugmaschine (100) nach zumindest einem der Ansprüche 1 bis 9, mit den Verfahrensschritten:
- Bestimmen einer Soll-Verzahnungsgeometrie, insbesondere einer Soll-Zahnflankengeometrie und/oder Soll-Zahnlückerigeometrie, der ersten Verzahnung (210) des ersten Werkstücks (200), und
- Bearbeiten eines in dem Einspannmittel (120) der Werkzeugmaschine (100) eingespannten ersten Werkstücks (200), um eine erste Verzahnung (210) auf dem ersten Werkstück (200) anhand der bestimmten Soll-Verzahnungsgeometrie zu fertigen, wobei das erste Werkstück (200) ein Gegenstück zu einem eine zweite Verzahnung (310) aufweisenden zweiten Werkstück (300) ist, derart dass eine erste Zahnflanke der ersten Verzahnung (210) eine Gegenflanke einer zweiten Zahnflanke der zweiten Verzahnung (310) bildet,
- Ermitteln nach und/oder während der Bearbeitung des ersten Werkstücks (200) an der Werkzeugmaschine (100), ob eine momentane Geometrie, insbesondere eine momentane Zahnflankengeometrie und/oder momentane Zahnlückengeometrie, der ersten Verzahnung (210) des ersten Werkstücks (200) von der bestimmten Soll-Verzahnungsgeometrie, insbesondere von einer Soll-Zahnflankengeometrie und/oder Soll-Zahnlückengeometrie, der ersten Verzahnung (210) des ersten Werkstücks (200) abweicht,
**gekennzeichnet durch**
- Aufnehmen des zweiten Werkstücks in dem Aufnahmemittel (111) der Werkzeugmaschine (100), und
- Steuern des in dem Aufnahmemittel (111) aufgenommenen zweiten Werkstücks (300) und des in dem Einspannmittel (120) eingespannten ersten Werkstücks (200) relativ zueinander derart, dass die erste Verzahnung (210) des ersten Werkstücks (200) und die zweite Verzahnung (310) des zweiten Werkstücks (300) sich im Eingriff befinden und zumindest eine erste Flanke der ersten Verzahnung (210) mit zumindest einer ersten Gegenflanke der zweiten Verzahnung (310) zusammenwirkt.

11. Verfahren zum Bearbeiten von einem Werkstück nach Anspruch 10, **gekennzeichnet durch** einen oder mehreren der Verfahrenschritte:
- mechanisches Abtasten einer Zahnflankenseite der ersten Verzahnung (210) des ersten Werkstücks (200) mittels eines Messtasters (140), um festzustellen, ob die momentane Verzahnungsgeometrie der ersten Verzahnung (210) des ersten Werkstücks (200) von der Soll-Verzahnungsgeometrie der ersten Verzahnung (210) des ersten Werkstücks (200) abweicht,
- optisches Abtasten einer Zahnflankenseite der ersten Verzahnung (210) des ersten Werkstücks (200), um festzustellen, ob die momentane Verzahnungsgeometrie der ersten Verzahnung (210) des ersten Werkstücks (200) von der Soll-Verzahnungsgeometrie der ersten Verzahnung (210) des ersten Werkstücks (200) abweicht, und
- induktives Abtasten einer Zahnflankenseite der ersten Verzahnung (210) des ersten Werkstücks (200), um festzustellen, ob die momentane Verzahnungsgeometrie der ersten Verzahnung (210) des ersten Werkstücks (200) von der Soll-Verzahnungsgeometrie der ersten Verzahnung (210) des ersten Werkstücks (200) abweicht.

12. Verfahren zum Bearbeiten von einem Werkstück nach Anspruch 10 oder Anspruch 11, **gekennzeichnet durch** den Verfahrensschritt:
- Ermitteln des Tragbilds zwischen der ersten Flanke der ersten Verzahnung (210) und der ersten Gegenflanke der zweiten Verzahnung (310) mittels Tuschieren.

13. Verfahren zum Bearbeiten von einem Werkstück nach zumindest einem der Ansprüche 10 bis 12, **gekennzeichnet durch** den Verfahrensschritt:
- Ermitteln, ob ein gemeinsames Laufverhalten des ersten Werkstücks (200) und des zweiten Werkstücks (300) von einem Soll-Laufverhalten des ersten Werkstücks (200) und des zweiten Werkstücks (300) abweicht, während das erste Werkstück (200) und das zweite Werkstück (300) relativ zueinander derart gesteuert werden, dass die erste Verzahnung (210) des ersten Werkstücks (200) und die zweite Verzahnung (310) des zweiten Werkstücks (300) sich im Eingriff befinden und zumindest die erste Flanke der ersten Verzahnung (210) mit der ersten Gegenflanke der zweiten Verzahnung (310) abrollend zusammenwirkt.

## Claims

1. A machine tool for processing a workpiece (200; 300) by means of one or more tools (130) controlled based on control data by machining, the machine tool (100) including at least 5 simultaneously controllable axes and comprising a clamping means (120) for clamping the workpiece (200; 300) and a control device (110) with a receiving means (111) for receiving one of the one or more tools (130), wherein the control device (110) is suitable for controlling the tool (130) received in the receiving means (111) based on the control data along a tool path for removing material from the workpiece (200; 300) clamped in the clamping means (120),
wherein the machine tool (100) is suitable for processing a first workpiece (200) in order to manufacture a first toothing (210) on the first workpiece (200), wherein the first workpiece (200) is a counterpart to a second workpiece (300) having a second toothing (310), such that a first tooth flank of the first toothing (210) forms a mating flank of a second tooth flank of the second toothing (310), and
wherein the machine tool (100) further includes a test system suitable for determining if a current geometry, in particular a current tooth flank geometry and/or current tooth space geometry, of the first toothing (210) of the first workpiece (200) deviates from a nominal toothing geometry, in particular from a nominal tooth flank geometry and/or a nominal tooth space geometry, of the first toothing (210) of the first workpiece (200), after and/or during processing of the first workpiece (200) on the machine tool (100),
**characterized in that**
the receiving means (111) of the machine tool (100) is arranged to receive the second workpiece (300), and
the machine tool (100) is suitable for controlling the second workpiece (300) received in the receiving means (111) and the first workpiece (200) clamped in the clamping means (120) relative to each other such that the first toothing (210) of the first workpiece (200) and the second toothing (310) of the second workpiece (300) are engaged with each other and at least a first flank of the first toothing (210) cooperates with at least a first mating flank of the second toothing (310).

2. The machine tool according to claim 1, **characterized in that** the first workpiece (200), in particular in the finished state after processing on the machine tool (100), is a spur gear with an internal toothing, a spur gear with an external toothing, a toothed rack or a bevel gear, and the second workpiece (300), in particular in the finished state after processing on the machine tool (100), is a spur gear with an internal toothing, a spur gear with an external toothing, a toothed rack or a bevel gear such that the second workpiece (300) is a counterpart to the first workpiece (200).

3. The machine tool according to claim 1 or 2, **characterized in that** the test system of the machine tool (100) includes a first measuring scanning means suitable for determining if the current toothing geometry of the first toothing (210) of the first workpiece (200) deviates from the nominal toothing geometry of the first toothing (210) of the first workpiece (200) by mechanically scanning a tooth flank side of the first toothing (210) of the first workpiece (200) by means of a measuring scanner (140), and/or that the test system of the machine tool (100) includes a second measuring scanning means suitable for determining if the current geometry of the first toothing (210) of the first workpiece (200) deviates from the nominal toothing geometry, in particular from a nominal tooth flank geometry and/or nominal tooth space geometry, of the first toothing (210) of the first workpiece (200) by optically and/or inductively scanning a tooth flank side of the first toothing (210) of the first workpiece (200).

4. The machine tool according to at least one of claims 1 to 3, **characterized in that** the test system of the machine tool (100) includes a contact pattern determining device suitable for determining a contact pattern between the first flank of the first toothing (210) and the first mating flank of the second toothing (310) by means of touching.

5. The machine tool according to at least one of claims 1 to 4, **characterized in that** the first workpiece (200) and/or the second workpiece (300) are a gear, in particular a bevel gear or spur gear, and the machine tool (100) is suitable for controlling one or more rotary axes of the machine tool (100) for controlling the second workpiece (300) received in the receiving means (111) and the first workpiece (200) clamped in the clamping means (120) relative to each other.

6. The machine tool according to at least one of claims 1 to 5, **characterized in that** the first workpiece (200) is a gear, in particular a bevel gear or spur gear, and the second workpiece (300) is a gear, in particular a bevel gear or spur gear,
wherein the machine tool (100) is suitable for rotationally driving the first workpiece (200) around a center axis (M1) of the first workpiece (200) by means of a first rotary axis, which is suitable for rotationally driving the clamping means (120) of the machine tool (100), and/or
wherein the machine tool (100) is further suitable for rotationally driving the second workpiece (300) around a center axis (M2) of the second workpiece (300) by means of a second rotary axis, which is suitable for rotationally driving the receiving means (111) of the machine tool (100).

7. The machine tool according to at least one of claims 1 to 5, **characterized in that** the test system of the machine tool (100) further includes a running performance test means, which is suitable for determining if a common running performance of the first workpiece (200) and the second workpiece (300) deviates from a nominal running performance of the first workpiece (200) and the second workpiece (300), while the first workpiece (200) and the second workpiece (300) are controlled relative to each other such that the first toothing (210) of the first workpiece (200) and the second toothing (310) of the second workpiece (300) are engaged with each other and at least the first flank of the first toothing (210) cooperates with the first mating flank of the second toothing (310) in rolling manner.

8. The machine tool according to claim 7, **characterized in that** the running performance test means includes one or more acoustic sensors and is suitable for determining if a common running performance of the first workpiece (200) and the second workpiece (300) deviates from a nominal running performance of the first workpiece (200) and the second workpiece (300) by determining a running noise arising in driving the first workpiece (200) and the second workpiece (300) by the one or more acoustic sensors, while the first workpiece (200) and the second workpiece (300) are controlled relative to each other such that the first toothing (210) of the first workpiece (200) and the second toothing (310) of the second workpiece (300) are engaged with each other and at least the first flank of the first toothing (210) cooperates with the first mating flank of the second toothing (310) in rolling manner, and/or that the running performance test means includes one or more vibration sensors and is suitable for determining if a common running performance of the first workpiece (200) and the second workpiece (300) deviates from a nominal running performance of the first workpiece (200) and the second workpiece (300) by determining vibrations arising in driving the first workpiece (200) and the second workpiece (300) by the one or more vibration sensors, while the first workpiece (200) and the second workpiece (300) are controlled relative to each other such that the first toothing (210) of the first workpiece (200) and the second toothing (310) of the second workpiece (300) are engaged with each other and at least the first flank of the first toothing (210) cooperates with the first mating flank of the second toothing (310) in rolling manner.

9. The machine tool according to at least one of claims 1 to 8, **characterized in that** the machine tool is suitable for post-processing the first workpiece (200) clamped in the clamping means on the machine tool by a tool (130) received in the control device (110) with a receiving means (111) if the test system determines that a current geometry, in particular a current tooth flank geometry and/or current tooth space geometry, of the first toothing (210) of the first workpiece (200) deviates from a nominal toothing geometry, in particular from a nominal tooth flank geometry and/or nominal tooth space geometry, of the first toothing (210) of the first workpiece (200), after and/or during processing of the first workpiece (200) on the machine tool (100).

10. A method for processing a workpiece by means of one or more tools controlled based on control data by machining on a machine tool (100) according to at least one of claims 1 to 9, including the method steps of:
- determining a nominal toothing geometry, in particular a nominal tooth flank geometry and/or nominal tooth space geometry, of the first toothing (210) of the first workpiece (200), and
- processing a first workpiece (200) clamped in the clamping means (120) of the machine tool (100) in order to manufacture a first toothing (210) on the first workpiece (200) based on the determined nominal toothing geometry, wherein the first workpiece (200) is a counterpart to a second workpiece (300) having a second toothing (310) such that a first tooth flank of the first toothing (210) forms a mating flank of a second tooth flank of a second toothing (310),
- determining if a current geometry, in particular a current tooth flank geometry and/or current tooth space geometry, of the first toothing (210) of the first workpiece (200) deviates from the determined nominal toothing geometry, in particular from a nominal tooth flank geometry and/or nominal tooth space geometry, of the first toothing (210) of the first workpiece (200), after and/or during processing of the first workpiece (200) on the machine tool (100), **characterized by**
- receiving the second workpiece in the receiving means (111) of the machine tool (100), and
- controlling the second workpiece (300) received in the receiving means (111) and the first workpiece (200) clamped in the clamping means (120) relative to each other such that the first toothing (210) of the first workpiece (200) and the second toothing (310) of the second workpiece (300) are engaged with each other and at least a first flank of the first toothing (210) cooperates with at least a first mating flank of the second toothing (310).

11. The method for processing a workpiece according to claim 10, **characterized by** one or more of the method steps of:
- mechanically scanning a tooth flank side of the first toothing (210) of the first workpiece (200) by means of a measuring scanner (140) in order to determine if the current toothing geometry of the first toothing (210) of the first workpiece (200) deviates from the nominal toothing geometry of the first toothing (210) of the first workpiece (200),
- optically scanning a tooth flank side of the first toothing (210) of the first workpiece (200) in order to determine if the current toothing geometry of the first toothing (210) of the first workpiece (200) deviates from the nominal toothing geometry of the first toothing (210) of the first workpiece (200), and
- inductively scanning a tooth flank side of the first toothing (210) of the first workpiece (200) in order to determine if the current toothing geometry of the first toothing (210) of the first workpiece (200) deviates from the nominal toothing geometry of the first toothing (210) of the first workpiece (200).

12. The method for processing a workpiece according to claim 10 or claim 11, **characterized by** the method step of:
- determining the contact pattern between the first flank of the first toothing (210) and the first mating flank of the second toothing (310) by means of touching.

13. The method for processing a workpiece according to at least one of claims 10 to 12, **characterized by** the method step of:
- determining if a common running performance of the first workpiece (200) and the second workpiece (300) deviates from a nominal running performance of the first workpiece (200) and the second workpiece (300), while the first workpiece (200) and the second workpiece (300) are controlled relative to each other such that the first toothing (210) of the first workpiece (200) and the second toothing (310) of the second workpiece (300) are engaged with each other and at least the first flank of the first toothing (210) cooperates with the first mating flank of the second toothing (310) in rolling manner.

## Revendications

1. Machine-outil destinée à usiner une pièce (200 ; 300) au moyen d'un ou de plusieurs outils (130) commandés à partir de données de commande, la machine-outil (100) comprenant au moins 5 axes susceptibles d'être pilotés simultanément, comportant un moyen de serrage (120) pour serrer la pièce à usiner (200 ; 300) et un dispositif de commande (110) présentant un moyen de logement (111) destiné à loger le ou l'un des plusieurs outils (130), le dispositif de commande (110) étant apte à commander l'outil (130) logé dans le moyen de logement (111) en se basant sur les données de commande le long d'une trajectoire d'usinage en vue d'enlever le matériau de la pièce (200 ; 300) serrée dans le moyen de serrage (120),
la machine-outil (100) étant apte à usiner une première pièce (200) afin de réaliser une première denture (210) sur la première pièce (200), la première pièce (200) étant une pièce complémentaire à une seconde pièce (300) présentant une seconde denture (310), de telle sorte qu'un premier flanc de dent de la première denture (210) constitue un flanc conjugué à un second flanc de dent de la seconde denture (310), et
la machine-outil (100) comprenant en outre un système de contrôle qui est apte à déterminer, après et/ou pendant l'usinage de la première pièce (200) sur la machine-outil (100), si une géométrie momentanée, en particulier une géométrie momentanée d'un flanc de dent et/ou une géométrie momentanée d'un entredent, de la première denture (210) de la première pièce (200) diffère d'une géométrie de denture de consigne, en particulier d'une géométrie de consigne du flanc de dent et/ou d'une géométrie de consigne de l'entredent, de la première denture (210) de la première pièce (200),
**caractérisée en ce que**
le moyen de logement (111) de la machine-outil (100) est adapté à loger la seconde pièce à usiner (300), et
la machine-outil (100) est apte à commander la seconde pièce (300) logée dans le moyen de logement (111) et la première pièce (200) serrée dans le moyen de serrage (120), l'une par rapport à l'autre, de telle sorte que la première denture (210) de la première pièce (200) et la seconde denture (310) de la seconde pièce (300) sont en engrènement et qu'au moins un premier flanc de la première denture (210) coopère avec au moins un premier flanc conjugué de la seconde denture (310).

2. Machine-outil selon la revendication 1, **caractérisée en ce que** la première pièce (200) est, en particulier dans l'état fini après l'usinage sur la machine-outil (100), une roue dentée droite présentant une denture intérieure, une roue dentée droite présentant une denture extérieure, une crémaillère ou une roue dentée conique, et la seconde pièce (300) est, en particulier dans l'état fini après l'usinage sur la machine-outil (100), une roue dentée droite présentant une denture intérieure, une roue dentée droite présentant une denture extérieure, une crémaillère ou une roue dentée conique, de telle sorte que la seconde pièce (300) est une pièce complémentaire à la première pièce (200).

3. Machine-outil selon la revendication 1 ou 2, **caractérisée en ce que** le système de contrôle de la machine-outil (100) comprend un premier moyen de mesure/palpage qui est apte à constater, par palpage mécanique d'une face de flanc de dent de la première denture (210) de la première pièce (200) au moyen d'un palpeur de mesure (140), si la géométrie momentanée de la première denture (210) de la première pièce (200) diffère de la géométrie de consigne de la première denture (210) de la première pièce (200), et/ou **en ce que** le système de contrôle de la machine-outil (100) comprend un second moyen de mesure/palpage qui est apte à constater, par palpage optique et/ou inductif d'une face de flanc de dent de la première denture (210) de la première pièce (200), si la géométrie momentanée de la première denture (210) de la première pièce (200) diffère de la géométrie de consigne, en particulier de la géométrie de consigne du flanc de dent et/ou de la géométrie de consigne de l'entredent, de la première denture (210) de la première pièce (200).

4. Machine-outil selon l'une au moins des revendications 1 à 3, **caractérisée en ce que** le système de contrôle de la machine-outil (100) comprend un dispositif de détermination de la portée qui est apte à déterminer par encrage une portée entre le premier flanc de la première denture (210) et le premier flanc conjugué de la seconde denture (310).

5. Machine-outil selon l'une au moins des revendications 1 à 4, **caractérisée en ce que** la première pièce (200) et/ou la seconde pièce (300) est une roue dentée, en particulier une roue conique ou une roue droite, et la machine-outil (100) est apte à piloter un ou plusieurs axes rotatifs de la machine-outil (100) l'un par rapport à l'autre, en vue de commander la seconde pièce (300) logée dans le moyen de logement (111) et la première pièce (200) serrée dans le moyen de serrage (120).

6. Machine-outil selon l'une au moins des revendications 1 à 5, **caractérisée en ce que** la première pièce (200) est une roue dentée, en particulier une roue conique ou une roue droite, et la seconde pièce (300) est une roue dentée, en particulier une roue conique ou une roue droite,
la machine-outil (100) étant apte à entraîner la première pièce (200) en rotation autour d'un axe central (M1) de la première pièce (200) au moyen d'un premier axe rotatif qui est apte à entraîner en rotation le moyen de serrage (120) de la machine-outil (100), et/ou
la machine-outil (100) étant en outre apte à entraîner la seconde pièce (300) en rotation autour d'un axe central (M2) de la seconde pièce (300) au moyen d'un second axe rotatif qui est apte à entraîner en rotation le moyen de logement (111) de la machine-outil (100).

7. Machine-outil selon l'une au moins des revendications 1 à 5, **caractérisée en ce que** le système de contrôle de la machine-outil (100) comprend en outre un moyen de contrôle du comportement en marche qui est apte à déterminer si un comportement en marche commun de la première pièce (200) et de la seconde pièce (300) diffère d'un comportement en marche de consigne de la première pièce (200) et de la seconde pièce (300), alors que la première pièce (200) et la seconde pièce (300) sont commandées l'une par rapport à l'autre de telle sorte que la première denture (210) de la première pièce (200) et la seconde denture (310) de la seconde pièce (300) sont en engrènement et qu'au moins le premier flanc de la première denture (210) coopère avec le premier flanc conjugué de la seconde denture (310) en roulant sur celui-ci.

8. Machine-outil selon la revendication 7, **caractérisée en ce que** le moyen de contrôle du comportement comprend un ou plusieurs capteurs acoustiques, et en déterminant un bruit de marche généré lors de l'entraînement de la première pièce (200) et de la seconde pièce (300) par le ou les plusieurs capteurs acoustiques, il est apte à déterminer si un comportement en marche commun de la première pièce (200) et de la seconde pièce (300) diffère d'un comportement en marche de consigne de la première pièce (200) et de la seconde pièce (300), alors que la première pièce (200) et la seconde pièce (300) sont commandées l'une par rapport à l'autre de telle sorte que la première denture (210) de la première pièce (200) et la seconde denture (310) de la seconde pièce (300) sont en engrènement et qu'au moins le premier flanc de la première denture (210) coopère avec le premier flanc conjugué de la seconde denture (310) en roulant sur celui-ci, et/ou **en ce que** le moyen de contrôle du comportement en marche comprend un ou plusieurs capteurs de vibrations, et en déterminant des vibrations générées lors de l'entraînement de la première pièce (200) et de la seconde pièce (300) par le ou les plusieurs capteurs de vibrations, il est apte à déterminer si un comportement en marche commun de la première pièce (200) et de la seconde pièce (300) diffère d'un comportement en marche de consigne de la première pièce (200) et de la seconde pièce (300), alors que la première pièce (200) et la seconde pièce (300) sont commandées l'une par rapport à l'autre de telle sorte que la première denture (210) de la première pièce (200) et la seconde denture (310) de la seconde pièce (300) sont en engrènement et qu'au moins le premier flanc de la première denture (210) coopère avec le premier flanc conjugué de la seconde denture (310) en roulant sur celui-ci.

9. Machine-outil selon l'une au moins des revendications 1 à 8, **caractérisée en ce que** la machine-outil est apte à ré-usiner sur la machine-outil la première pièce (200), serrée dans le moyen de serrage, par un outil (130) logé dans le dispositif de commande (110) par un moyen de logement (111), si le système de contrôle détermine, après et/ou pendant l'usinage de la première pièce (200) sur la machine-outil (100), qu'une géométrie momentanée, en particulier une géométrie momentanée d'un flanc de dent et/ou une géométrie momentanée d'un entredent, de la première denture (210) de la première pièce (200) diffère d'une géométrie de denture de consigne, en particulier d'une géométrie de consigne du flanc de dent et/ou d'une géométrie de consigne de l'entredent, de la première denture (210) de la première pièce (200).

10. Procédé d'usinage d'une pièce à usiner au moyen d'un ou de plusieurs outils commandés à partir de données de commande, sur une machine-outil (100) selon l'une au moins des revendications 1 à 9, comprenant les étapes suivantes :
- on définit une géométrie de denture de consigne, en particulier une géométrie de consigne du flanc de dent et/ou une géométrie de consigne de l'entredent, de la première denture (210) de la première pièce (200), et
- on usine une première pièce (200) serrée dans le moyen de serrage (120) de la machine-outil (100), afin de réaliser une première denture (210) sur la première pièce (200) à partir de la géométrie de consigne définie de la denture, la première pièce (200) étant une pièce complémentaire à une seconde pièce (300) présentant une seconde denture (310), de telle sorte qu'un premier flanc de dent de la première denture (210) constitue un flanc conjugué à un second flanc de dent de la seconde denture (310), et
- après et/ou pendant l'usinage de la première pièce (200) sur la machine-outil (100), on détermine si une géométrie momentanée, en particulier une géométrie momentanée d'un flanc de dent et/ou une géométrie momentanée d'un entredent, de la première denture (210) de la première pièce (200) diffère d'une géométrie de denture de consigne, en particulier d'une géométrie de consigne du flanc de dent et/ou d'une géométrie de consigne de l'entredent, de la première denture (210) de la première pièce (200),
**caractérisé par**
- le logement de la seconde pièce à usiner dans le moyen de logement (111) de la machine-outil (100) et
- la commande de la seconde pièce (300) logée dans le moyen de logement (111) et la première pièce (200) serrée dans le moyen de serrage (120), l'une par rapport à l'autre, de telle sorte que la première denture (210) de la première pièce (200) et la seconde denture (310) de la seconde pièce (300) sont en engrènement et qu'au moins un premier flanc de la première denture (210) coopère avec au moins un premier flanc conjugué de la seconde denture (310).

11. Procédé d'usinage d'une pièce à usiner selon la revendication 10, **caractérisé par** l'une ou plusieurs des étapes suivantes :
- le palpage mécanique d'une face de flanc de dent de la première denture (210) de la première pièce à usiner (200) au moyen d'un palpeur de mesure (140), en vue de constater si la géométrie momentanée de la première denture (210) de la première pièce (200) diffère de la géométrie de consigne de la première denture (210) de la première pièce (200),
- le palpage optique d'une face de flanc de dent de la première denture (210) de la première pièce à usiner (200), en vue de constater si la géométrie momentanée de la première denture (210) de la première pièce (200) diffère de la géométrie de consigne de la première denture (210) de la première pièce (200), et
- le palpage inductif d'une face de flanc de dent de la première denture (210) de la première pièce à usiner (200), en vue de constater si la géométrie momentanée de la première denture (210) de la première pièce (200) diffère de la géométrie de consigne de la première denture (210) de la première pièce (200).

12. Procédé d'usinage d'une pièce à usiner selon la revendication 10 ou la revendication 11, **caractérisé par** l'étape suivante :
- la détermination par encrage de la portée entre le premier flanc de la première denture (210) et le premier flanc conjugué de la seconde denture (310).

13. Procédé d'usinage d'une pièce à usiner selon l'une au moins des revendications 10 à 12, **caractérisé par** l'étape suivante :
- la détermination si un comportement en marche commun de la première pièce (200) et de la seconde pièce (300) diffère d'un comportement en marche de consigne de la première pièce (200) et de la seconde pièce (300), alors que la première pièce (200) et la seconde pièce (300) sont commandées l'une par rapport à l'autre de telle sorte que la première denture (210) de la première pièce (200) et la seconde denture (310) de la seconde pièce (300) sont en engrènement et qu'au moins le premier flanc de la première denture (210) coopère avec le premier flanc conjugué de la seconde denture (310) en roulant sur celui-ci.
